# EUROPEAN PATENT APPLICATION

(11) **EP 4 697 826 A1**
(43) Date of publication of application: **18.02.2026**
(21) Application number: 24788017.2
(22) Date of filing: 08.04.2024
(51) Int. Cl.: H04W 72/04, H04W 36/00

(54) **METHOD AND APPARATUS USED IN NODE FOR WIRELESS COMMUNICATION**

(30) Priority: 10.04.2023 CN 202310376371
(71) Applicant: Apogee Networks, LLC, Dallas, TX 75201 (US)
(72) Inventor: WU, Lu, Shanghai 201206 (CN); SONG, Shulin, Shanghai 201206 (CN); ZHANG, Xiaobo, Shanghai 201206 (CN)
(74) Representative: Gunzelmann, Rainer
(86) International application number: PCT/CN2024/086528
(87) International publication number: WO 2024/212914

(57) **Abstract**

Disclosed in the present application are a method and apparatus used in a node for wireless communication. The method comprises: a first node receiving a first information block set; receiving a first signaling; and receiving a first signal. The first information block set indicates a first TCI state and a second TCI state, and the first TCI state and the second TCI state are two TCI states configured to a first serving cell. The first signaling is used for scheduling or triggering the first signal, a quasi co-location parameter of the first signal is determined by the two TCI states, and the two TCI states that determine the quasi co-location parameter of the first signal depend on whether a physical cell identity associated with at least one of the first TCI state and the second TCI state is the same as a physical cell identity of the first serving cell. According to the method, a quasi co-location parameter of a signal can be appropriately selected according to whether a physical cell identity associated with an indicated TCI state is the same as a physical cell identity of a serving cell.

## Description

### Technical Field

The present application relates to a transmission method and apparatus in a wireless communication system, and in particular to a transmission method and apparatus for wireless signals in a wireless communication system supporting a cellular network.

### Background Art

In an LTE (Long-Term Evolution) system, inter-cell handover is controlled by a base station based on the measurement of UE (User Equipment). Inter-cell handover in 3GPP (3rd Generation Partner Project) R (Release) 15 basically follows the mechanism in LTE. Later, a TCI (Transmission configuration indicator) state associated with a physical cell identity different from a physical cell identity (PCI) of a first serving cell is introduced in 3GPP R17 to implement quick cross-cell beam handover, thereby improving the performance of users at cell borders.

### Summary of the Invention

The inventor has found through research that how to determine a quasi co-location parameter of a signal is one key issue.

In view of the above problem, the present application discloses a solution. It should be explained that, although the above description takes a cellular network as examples, the present application is also applicable to other scenarios such as a V2X (Vehicle-to-Everything) scenario, and achieves similar technical effects in the cellular network. In addition, the adoption of a unified solution in different scenarios (including but not limited to a downlink, an uplink, and an accompanying link) can also help reduce hardware complexity and costs. It should be noted that in the absence of conflict, embodiments and features in the embodiments in user equipment of the present application may be applied to a base station, and vice versa. In the absence of conflict, the embodiments and the features in the embodiments of the present application can be arbitrarily combined with each other.

As one embodiment, interpretations of the terminologies in the present application refer to definitions of TS36 series of a standard protocol of 3GPP.

As one embodiment, the interpretations of the terminologies in the present application refer to definitions of TS38 series of the standard protocol of 3GPP.

As one embodiment, the interpretations of the terminologies in the present application refer to definitions of TS37 series of the standard protocol of 3GPP.

As one embodiment, the interpretations of the terminologies in the present application refer to definitions of a standard protocol of the IEEE (Institute of Electrical and Electronics Engineers).

The present application discloses a method used in a first node for wireless communication, characterized by comprising:
receiving a first information block set; receiving a first signaling; and receiving a first signal,
wherein the first information block set indicates a first TCI state and a second TCI state, and the first TCI state and the second TCI state are two TCI states configured to a first serving cell; and the first signaling is used for scheduling or triggering the first signal, a quasi co-location parameter of the first signal is determined by the two TCI states, and the two TCI states that determine the quasi co-location parameter of the first signal depend on whether a physical cell identity associated with at least one of the first TCI state and the second TCI state is the same as a physical cell identity of the first serving cell.

As one embodiment, the problem to be solved by the present application comprises: how to determine a quasi co-location parameter of a signal.

As one embodiment, benefits of the present application comprise: according to the method, a quasi co-location parameter of a signal can be appropriately selected according to whether a physical cell identity associated with an indicated TCI state is the same as a physical cell identity of a serving cell.

As one embodiment, the benefits of the present application comprise: increasing system flexibility.

As one embodiment, the benefits of the present application comprise: supporting quick cross-cell beam handover.

As one embodiment, the benefits of the present application comprise: having good backward compatibility and simplifying system design.

According to one aspect of the present application, it is characterized in that, when physical cell identities associated with the first TCI state and the second TCI state respectively are both the same as the physical cell identity of the first serving cell, the first TCI state and the second TCI state are the two TCI states that determine the quasi co-location parameter of the first signal.

As one embodiment, the above method supports the use of the first TCI state and the second TCI state for determining the quasi co-location parameter of the first signal, thereby increasing system robustness and improving transmission efficiency.

According to one aspect of the present application, it is characterized in that, when only one of the physical cell identities associated with the first TCI state and the second TCI state respectively is the same as the physical cell identity of the first serving cell, the first TCI state and the second TCI state are the two TCI states that determine the quasi co-location parameter of the first signal.

As one embodiment, the benefits of the above method comprise: supporting quick cross-cell beam handover and being applicable to transmission in different scenarios.

According to one aspect of the present application, it is characterized in that, when the physical cell identities associated with the first TCI state and the second TCI state respectively are both different from the physical cell identity of the first serving cell, a third TCI state and a fourth TCI state are the two TCI states that determine the quasi co-location parameter of the first signal.

As one embodiment, the above method determines the quasi co-location parameter of the first signal by the third TCI state and the fourth TCI state, thereby increasing system robustness and being applicable to transmission in different scenarios.

According to one aspect of the present application, it is characterized in that, the third TCI state and the fourth TCI state are two TCI states of a reference CORESET, and the reference CORESET is one CORESET of the first serving cell; or the third TCI state is a TCI state of a first reference CORESET, the fourth TCI state is a TCI state of a second reference CORESET, and the first reference CORESET and the second reference CORESET are two CORESETs of the first serving cell.

As one embodiment, the benefits of the above method comprise: increasing system flexibility and being applicable to transmission in different scenarios.

According to one aspect of the present application, it is characterized in that, any one of T codepoints indicates one or two TCI states applied to a PDSCH, there is one T codepoint in the T codepoints that indicates two TCI states applied to the PDSCH, and the third TCI state and the fourth TCI state are two TCI states indicated by a minimum codepoint in the T codepoints that satisfy "indicating two TCI states applied to the PDSCH".

As one embodiment, the benefits of the above method comprise: having good backward compatibility and simplifying system design.

According to one aspect of the present application, it is characterized in that, any one of the T codepoints indicates one or two TCI states applied to the PDSCH, there is one T codepoint in the T codepoints that indicates two TCI states applied to the PDSCH, and the third TCI state and the fourth TCI state are two TCI states indicated by the minimum codepoint in the T codepoints that satisfy "indicating two TCI states applied to the PDSCH, and wherein a physical cell identity associated with at least one TCI state is the same as the physical cell identity of the first serving cell".

As one embodiment, the benefits of the above method comprise: ensuring that a common PDSCH is sent from a serving cell.

The present application discloses a method used in a second node for wireless communication, characterized by comprising:
sending a first information block set; sending a first signaling; and sending a first signal,
wherein the first information block set indicates a first TCI state and a second TCI state, and the first TCI state and the second TCI state are two TCI states configured to a first serving cell; and the first signaling is used for scheduling or triggering the first signal, a quasi co-location parameter of the first signal is determined by the two TCI states, and the two TCI states that determine the quasi co-location parameter of the first signal depend on whether a physical cell identity associated with at least one of the first TCI state and the second TCI state is the same as a physical cell identity of the first serving cell.

According to one aspect of the present application, it is characterized in that, when physical cell identities associated with the first TCI state and the second TCI state respectively are both the same as the physical cell identity of the first serving cell, the first TCI state and the second TCI state are the two TCI states that determine the quasi co-location parameter of the first signal.

According to one aspect of the present application, it is characterized in that, when only one of the physical cell identities associated with the first TCI state and the second TCI state respectively is the same as the physical cell identity of the first serving cell, the first TCI state and the second TCI state are the two TCI states that determine the quasi co-location parameter of the first signal.

According to one aspect of the present application, it is characterized in that, when the physical cell identities associated with the first TCI state and the second TCI state respectively are both different from the physical cell identity of the first serving cell, a third TCI state and a fourth TCI state are the two TCI states that determine the quasi co-location parameter of the first signal.

According to one aspect of the present application, it is characterized in that, the third TCI state and the fourth TCI state are two TCI states of a reference CORESET, and the reference CORESET is one CORESET of the first serving cell; or the third TCI state is a TCI state of a first reference CORESET, the fourth TCI state is a TCI state of a second reference CORESET, and the first reference CORESET and the second reference CORESET are two CORESETs of the first serving cell.

According to one aspect of the present application, it is characterized in that, any one of T codepoints indicates one or two TCI states applied to a PDSCH, there is one T codepoint in the T codepoints that indicates two TCI states applied to the PDSCH, and the third TCI state and the fourth TCI state are two TCI states indicated by a minimum codepoint in the T codepoints that satisfy "indicating two TCI states applied to the PDSCH".

According to one aspect of the present application, it is characterized in that, any one of the T codepoints indicates one or two TCI states applied to the PDSCH, there is one T codepoint in the T codepoints that indicates two TCI states applied to the PDSCH, and the third TCI state and the fourth TCI state are two TCI states indicated by the minimum codepoint in the T codepoints that satisfy "indicating two TCI states applied to the PDSCH, and wherein a physical cell identity associated with at least one TCI state is the same as the physical cell identity of the first serving cell".

The present application discloses a first node device for wireless communication, characterized by comprising:
a first receiver receiving a first information block set; receiving a first signaling; and receiving a first signal,
wherein the first information block set indicates a first TCI state and a second TCI state, and the first TCI state and the second TCI state are two TCI states configured to a first serving cell; and the first signaling is used for scheduling or triggering the first signal, a quasi co-location parameter of the first signal is determined by the two TCI states, and the two TCI states that determine the quasi co-location parameter of the first signal depend on whether a physical cell identity associated with at least one of the first TCI state and the second TCI state is the same as a physical cell identity of the first serving cell.

The present application discloses a second node device for wireless communication, characterized by comprising:
a second transmitter sending a first information block set; sending a first signaling; and sending a first signal,
wherein the first information block set indicates a first TCI state and a second TCI state, and the first TCI state and the second TCI state are two TCI states configured to a first serving cell; and the first signaling is used for scheduling or triggering the first signal, a quasi co-location parameter of the first signal is determined by the two TCI states, and the two TCI states that determine the quasi co-location parameter of the first signal depend on whether a physical cell identity associated with at least one of the first TCI state and the second TCI state is the same as a physical cell identity of the first serving cell.

As one embodiment, compared with a traditional solution, the present application has the following advantages:
- appropriately selecting a quasi co-location parameter of a signal according to whether a physical cell identity associated with an indicated TCI state is the same as a physical cell identity of a serving cell;
- ensuring that a common PDSCH is sent from a serving cell; and
- supporting quick cross-cell beam handover.

### Brief Description of the Drawings

Other features, purposes and advantages of the present application will become more apparent by reading the detailed description of the non-limiting embodiments in the following drawings with reference to the following drawings:
FIG. 1 shows a flowchart of a first information block set, a first signaling, and a first signal according to one embodiment of the present application;
FIG. 2 shows a schematic diagram of a network architecture according to one embodiment of the present application;
FIG. 3 shows a schematic diagram of an embodiment of a wireless protocol architecture for a user plane and a control plane according to one embodiment of the present application;
FIG. 4 shows a schematic diagram of a first communication device and a second communication device according to one embodiment of the present application;
FIG. 5 shows a flowchart of transmission according to one embodiment of the present application;
FIG. 6 shows a schematic diagram of a relationship between a quasi co-location parameter of a first signal and physical cell identities associated with a first TCI state and a second TCI state respectively according to one embodiment of the present application;
FIG. 7 shows a schematic diagram of a relationship between a quasi co-location parameter of a first signal and physical cell identities associated with a first TCI state and a second TCI state respectively according to another embodiment of the present application;
FIG. 8 shows a schematic diagram of a relationship between a quasi co-location parameter of a first signal and physical cell identities associated with a first TCI state and a second TCI state respectively according to still another embodiment of the present application;
FIG. 9A to FIG. 9B show schematic diagrams of a third TCI state and a fourth TCI state according to one embodiment of the present application;
FIG. 10 shows a schematic diagram of a third TCI state and a fourth TCI state according to another embodiment of the present application;
FIG. 11 shows a schematic diagram of a third TCI state and a fourth TCI state according to still another embodiment of the present application;
FIG. 12 shows a structural block diagram of a processing device used in a first node device according to one embodiment of the present application; and
FIG. 13 shows a structural block diagram of a processing device used in a second node device according to one embodiment of the present application.

### Detailed Description of Embodiments

The technical solutions of the present application will be further described in detail below in conjunction with drawings. It should be noted that, in the absence of conflict, embodiments and the features in the embodiments in the present application can be arbitrarily combined with each other.

### Embodiment 1

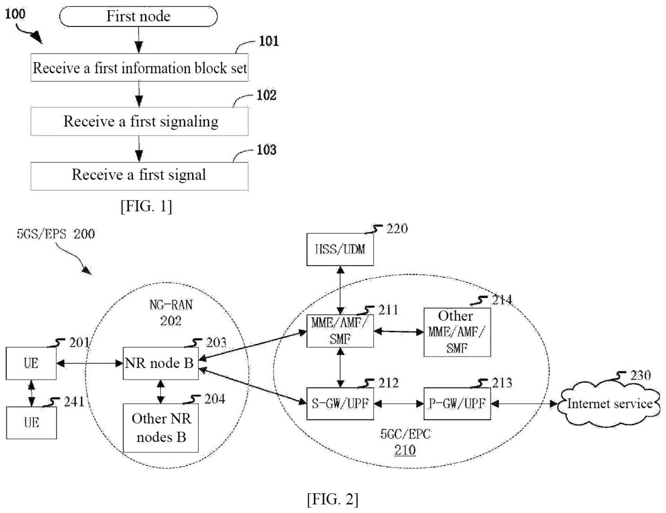

Embodiment 1 illustrates a flowchart of a first information block set, a first signaling, and a first signal according to one embodiment of the present application, as shown in FIG. 1. In 100 shown in FIG. 1, each block represents one step.

In Embodiment 1, a first node in the present application receives the first information block set in step 101; receives the first signaling in step 102; and receives the first signal in step 103, wherein the first information block set indicates a first TCI state and a second TCI state, and the first TCI state and the second TCI state are two TCI states configured to a first serving cell; and the first signaling is used for scheduling or triggering the first signal, a quasi co-location parameter of the first signal is determined by the two TCI states, and the two TCI states that determine the quasi co-location parameter of the first signal depend on whether a physical cell identity associated with at least one of the first TCI state and the second TCI state is the same as a physical cell identity of the first serving cell.

As one embodiment, the first TCI state and the second TCI state are two TCI states configured to the same BWP (BandWidth Part) of the first serving cell.

As one embodiment, the first information block set is carried by an RRC signaling.

As one embodiment, the first information block set is carried by an MAC CE signaling.

As one embodiment, the first information block set is carried by a physical layer signaling.

As one embodiment, a protocol layer to which a signaling carrying the first information block set is a protocol layer below an RRC layer.

As one embodiment, the first information block set is carried by a DCI (Downlink Control Information) signaling.

As one embodiment, the first information block set is carried by one DCI signaling.

As one embodiment, the first information block set comprises a Transmission configuration indication field in one DCI signaling.

As one embodiment, the first information block set comprises at least one Transmission configuration indication field in one DCI signaling.

As one embodiment, the first information block set comprises one or more Transmission configuration indication fields in one DCI signaling.

As one embodiment, the first information block set comprises the Transmission configuration indication field in one DCI signaling, and the Transmission configuration indication field comprised in the first information block set indicates the first TCI state and the second TCI state.

As one sub-embodiment of the above embodiments, the first TCI state is a first TCI state indicated by the Transmission configuration indication field comprised in the first information block set, and the second TCI state is a second TCI state indicated by the Transmission configuration indication field comprised in the first information block set.

Typically, the first signaling is one physical layer signaling.

Typically, the first signaling is one DCI signaling.

As one embodiment, a CORESET to which the first signaling belongs is associated with one USS (UE-specific search space).

As one embodiment, the CORESET to which the first signaling belongs is associated with one CSS (Common search space).

As one embodiment, the first signaling is used for scheduling the first signal, and the first signal is transported on a PDSCH.

As one embodiment, the first signaling is one DCI signaling scheduling the first signal, and the first signal is transported on the PDSCH.

As one embodiment, the first signaling is one DCI signaling used for triggering the first signal, and the first signal is an aperiodic CSI-RS.

As one sub-embodiment of the above embodiments, the first signaling comprises a CSI request field, and the CSI request field in the first signaling is used for triggering the first signal.

Typically, a time offset between the first signaling and the first signal is less than a first threshold.

As one embodiment, the first signal is a PDSCH, the first signaling is a DCI signaling scheduling the first signal, and the first threshold is timeDurationForQCL.

As one embodiment, the first signal is an aperiodic CSI-RS, and the first threshold is beamSwitchTiming.

As one embodiment, the first signal is a PDSCH, and a name of the first threshold comprises timeDurationForQCL.

As one embodiment, the first signal is an aperiodic CSI-RS, and the name of the first threshold comprises beamSwitchTiming.

As one embodiment, a specific definition of the CSI request field refers to Section 7.3 of 3GPP TS38.212.

As one embodiment, the specific definition of timeDurationForQCL refers to Section 5.1.5 of 3GPP TS38.213.

As one embodiment, the specific definition of beamSwitchTiming refers to Section 5.2.1.5.1 of 3GPP TS38.213.

As one embodiment, the first signaling is the DCI signaling used for triggering the first signal, the first signal is the aperiodic CSI-RS, and a time offset between a last symbol of a PDCCH carrying the first signaling and a first symbol of the first signal is less than the first threshold.

As one embodiment, the first signaling is the DCI signaling used for triggering the first signal, the first signal is the aperiodic CSI-RS, and "a time offset between the first signaling and the first signal" is the time offset between the last symbol of the PDCCH carrying the first signaling and the first symbol of the first signal.

As one embodiment, "a time offset between the first signaling and the first signal" is the time offset between the last symbol of the PDCCH carrying the first signaling and the first symbol of the first signal.

As one embodiment, "a time offset between the first signaling and the first signal" is the time offset between a last symbol occupied by the first signaling and the first symbol of the first signal.

As one embodiment, "a time offset between the first signaling and the first signal" is the time offset between a first symbol occupied by the first signaling and the first symbol of the first signal.

As one embodiment, "a time offset between the first signaling and the first signal" is a time offset between an ending moment carrying the first signaling and a starting moment of the first signal.

As one embodiment, "a time offset between the first signaling and the first signal" is a time offset between a starting moment of the first signaling and the starting moment of the first signal.

As one embodiment, the meaning of "a last symbol" refers to: one latest symbol.

As one embodiment, the meaning of "a first symbol" refers to: one earliest symbol.

As one embodiment, the meaning of "a last symbol" refers to: one symbol of a maximum index.

As one embodiment, the meaning of "a first symbol" refers to: one symbol of a minimum index.

Typically, when physical cell identities associated with the first TCI state and the second TCI state respectively are both different from the physical cell identity of the first serving cell, the physical cell identities associated with the first TCI state and the second TCI state respectively are the same.

As one embodiment, the physical cell identity is PhysCellId.

As one embodiment, the physical cell identity is SCellIndex.

As one embodiment, the physical cell identity is CellIdentity.

As one embodiment, the quasi co-location parameter of the first signal comprises a quasi co-location parameter receiving the first signal.

As one embodiment, the quasi co-location parameter of the first signal comprises a quasi co-location parameter receiving the first signal and a quasi co-location parameter sending the first signal.

As one embodiment, the meaning of "a quasi co-location parameter of the first signal is determined by the two TCI states" comprises: the first signal is one PDSCH, and a quasi co-location parameter of any antenna port of the first signal is determined by the two TCI states.

As one sub-embodiment of the above embodiments, the first signal is transported using an SFN method.

As one embodiment, the meaning of "a quasi co-location parameter of the first signal is determined by the two TCI states" comprises: the first signal is one PDSCH, and any DMRS antenna port of the first signal and RSs (Reference Signals) in the two TCI states are quasi co-located.

As one sub-embodiment of the above embodiments, the first node is configured with a higher-layer parameter sfnSchemePdsch, and sfnSchemePdsch is set to 'sfnSchemeA'.

As one embodiment, the meaning of "a quasi co-location parameter of the first signal is determined by the two TCI states" comprises: the first signal is one PDSCH, and any DMRS antenna port of the first signal and the RSs (Reference Signals) in the two TCI states are quasi co-located, except for a QCL parameter {Doppler shift, Doppler spread} of one of the two TCI states.

As one sub-embodiment of the above embodiments, the first node is configured with of higher-layer parameter sfnSchemePdsch, and sfnSchemePdsch is set to 'sfnSchemeB'.

As one embodiment, the meaning of "a quasi co-location parameter of the first signal is determined by the two TCI states" comprises: the quasi co-location parameter of any antenna port of the first signal is determined by only one of the two TCI states.

As one sub-embodiment of the above embodiments, the first signal is transported using an SDM method.

As one embodiment, the meaning of "a quasi co-location parameter of the first signal is determined by the two TCI states" comprises: the first signal is a PDSCH, and a quasi co-location parameter of any DMRS antenna port of the first signal is determined by the two TCI states.

As one sub-embodiment of the above embodiments, the first signal is transported using the SFN method.

As one embodiment, the meaning of "a quasi co-location parameter of the first signal is determined by the two TCI states" comprises: the first signal is a PDSCH, and the quasi co-location parameter of any DMRS antenna port of the first signal is determined by only one of the two TCI states.

As one sub-embodiment of the above embodiments, the first signal is transported using the SDM method.

As one sub-embodiment of the above embodiments, the first signal is transported using a TDM method.

As one sub-embodiment of the above embodiments, the first signal is transported using an FDM method.

As one embodiment, the meaning of "a quasi co-location parameter of the first signal is determined by the two TCI states" comprises: the first signal comprises a first sub-signal and a second sub-signal, and a quasi co-location parameter of the first sub-signal and a quasi co-location parameter of the second sub-signal are determined by the two TCI states respectively.

As one sub-embodiment of the above embodiments, the first sub-signal and the second sub-signal are SDM.

As one sub-embodiment of the above embodiments, the first sub-signal and the second sub-signal are TDM.

As one sub-embodiment of the above embodiments, the first sub-signal and the second sub-signal are FDM.

As one sub-embodiment of the above embodiments, the first sub-signal and the second sub-signal are two repetitions of the same transport block (TB) respectively.

As one sub-embodiment of the above embodiments, the first signal is one PDSCH, and the first sub-signal and the second sub-signal comprise different layers of the first signal respectively.

As one embodiment, the meaning of the sentence "a quasi co-location parameter of the first signal is determined by the two TCI states" comprises: the first signal is a PDSCH, and all DMRS ports of the first signal and RSs indicated by the two TCI states are quasi co-located.

As one embodiment, the meaning of the sentence "a quasi co-location parameter of the first signal is determined by the two TCI states" comprises: a quasi co-location parameter used for receiving or sending the RSs indicated by the two TCI states is used for receiving the first signal.

As one embodiment, the meaning of the sentence "a quasi co-location parameter used for receiving or sending the RSs indicated by the two TCI states is used for receiving the first signal" comprises: the first node assumes that the quasi co-location parameter used for receiving or sending the RSs indicated by the two TCI states is used for receiving the first signal.

As one embodiment, the meaning of the sentence "a quasi co-location parameter of the first signal is determined by the two TCI states" comprises: the quasi co-location parameter used for receiving the RSs indicated by the two TCI states is used for receiving the first signal.

As one embodiment, the meaning of the sentence "the quasi co-location parameter used for receiving the RSs indicated by the two TCI states is used for receiving the first signal" comprises: the first node assumes that the quasi co-location parameter used for receiving the RSs indicated by the two TCI states is used for receiving the first signal.

As one embodiment, the meaning of the sentence "a quasi co-location parameter of the first signal is determined by the two TCI states" comprises: the two TCI states are used for determining quasi co-location parameters of all antenna ports of the first signal.

As one embodiment, the meaning of the sentence "a quasi co-location parameter of the first signal is determined by the two TCI states" comprises: the first signal is a PDSCH, and the two TCI states are used for determining quasi co-location parameters of all DMRS (DeModulation Reference Signal) ports of the first signal.

As one embodiment, the meaning of the sentence "a quasi co-location parameter of the first signal is determined by the two TCI states" comprises: the two TCI states indicate a quasi co-location relationship between the RSs and any antenna port of the first signal.

As one embodiment, the meaning of the sentence "a quasi co-location parameter of the first signal is determined by the two TCI states" comprises: the first signal is a PDSCH, and the two TCI states indicate a quasi co-location relationship between the RSs and any DMRS port of the first signal.

As one embodiment, the meaning of the sentence "a quasi co-location parameter of the first signal is determined by the two TCI states" comprises: all antenna ports of the first signal and the RSs indicated by the two TCI states are quasi co-located.

As one embodiment, the meaning of the sentence "all antenna ports of the first signal and the RSs indicated by the two TCI states are quasi co-located" comprises: the first node assumes that all antenna ports of the first signal and the RSs indicated by the two TCI states are quasi co-located.

As one embodiment, the meaning of the sentence "a quasi co-location parameter of the first sub-signal and a quasi co-location parameter of the second sub-signal are determined by the two TCI states respectively" comprises: all DMRS ports of the first sub-signal and RSs indicated by one of the two TCI states are quasi co-located, and all DMRS ports of the second sub-signal and RSs indicated by the other of the two TCI states are quasi co-located.

As one embodiment, the meaning of the sentence "a quasi co-location parameter of the first sub-signal and a quasi co-location parameter of the second sub-signal are determined by the two TCI states respectively" comprises: a quasi co-location parameter used for receiving or sending the RSs indicated by one of the two TCI states is used for receiving the first sub-signal, and a quasi co-location parameter used for receiving or sending the RSs indicated by the other of the two TCI states is used for receiving the second sub-signal.

As one embodiment, the meaning of the sentence "a quasi co-location parameter used for receiving or sending the RSs indicated by one of the two TCI states is used for receiving the first sub-signal" comprises: the first node assumes that the quasi co-location parameter used for receiving or sending the RSs indicated by one of the two TCI states is used for receiving the first sub-signal; and the meaning of the sentence "a quasi co-location parameter used for receiving or sending the RSs indicated by the other of the two TCI states is used for receiving the second sub-signal" comprises: the first node assumes that the quasi co-location parameter used for receiving or sending the RSs indicated by the other of the two TCI states is used for receiving the second sub-signal.

As one embodiment, the meaning of the sentence "a quasi co-location parameter of the first sub-signal and a quasi co-location parameter of the second sub-signal are determined by the two TCI states respectively" comprises: the quasi co-location parameter used for receiving the RSs indicated by one of the two TCI states is used for receiving the first sub-signal, and the quasi co-location parameter used for receiving the RSs indicated by the other of the two TCI states is used for receiving the second sub-signal.

As one embodiment, the meaning of the sentence "the quasi co-location parameter used for receiving the RSs indicated by one of the two TCI states is used for receiving the first sub-signal" comprises: the first node assumes that the quasi co-location parameter used for receiving the RSs indicated by one of the two TCI states is used for receiving the first sub-signal; and the meaning of the sentence "a quasi co-location parameter used for receiving the RSs indicated by the other of the two TCI states is used for receiving the second sub-signal" comprises: the first node assumes that the quasi co-location parameter used for receiving the RSs indicated by the other of the two TCI states is used for receiving the second sub-signal.

As one embodiment, the meaning of the sentence "a quasi co-location parameter of the first sub-signal and a quasi co-location parameter of the second sub-signal are determined by the two TCI states respectively" comprises: one of the two TCI states is used for determining quasi co-location parameters of all antenna ports of the first sub-signal, and the other of the two TCI states is used for determining quasi co-location parameters of all antenna ports of the second sub-signal.

As one embodiment, the meaning of the sentence "a quasi co-location parameter of the first sub-signal and a quasi co-location parameter of the second sub-signal are determined by the two TCI states respectively" comprises: one of the two TCI states is used for determining quasi co-location parameters of all DMRS (DeModulation Reference Signal) ports of the first sub-signal, and the other of the two TCI states is used for determining quasi co-location parameters of all DMRS ports of the second sub-signal.

As one embodiment, the meaning of the sentence "a quasi co-location parameter of the first sub-signal and a quasi co-location parameter of the second sub-signal are determined by the two TCI states respectively" comprises: one of the two TCI states indicates a quasi co-location relationship between the RSs and any antenna port of the first sub-signal, and the other of the two TCI states indicates a quasi co-location relationship between the RSs and any antenna port of the second sub-signal.

As one embodiment, the meaning of the sentence "a quasi co-location parameter of the first sub-signal and a quasi co-location parameter of the second sub-signal are determined by the two TCI states respectively" comprises: one of the two TCI states indicates a quasi co-location relationship between the RSs and any DMRS port of the first sub-signal, and the other of the two TCI states indicates a quasi co-location relationship between the RSs and any DMRS port of the second sub-signal.

As one embodiment, the meaning of the sentence "a quasi co-location parameter of the first sub-signal and a quasi co-location parameter of the second sub-signal are determined by the two TCI states respectively" comprises: all antenna ports of the first sub-signal and the RSs indicated by one of the two TCI states are quasi co-located, and all antenna ports of the second sub-signal and the RSs indicated by the other of the two TCI states are quasi co-located.

As one embodiment, the meaning of the sentence "all antenna ports of the first sub-signal and the RSs indicated by one of the two TCI states are quasi co-located" comprises: the first node assumes that all antenna ports of the first sub-signal and the RSs indicated by one of the two TCI states are quasi co-located; and the meaning of the sentence "all antenna ports of the second sub-signal and the RSs indicated by the other of the two TCI states are quasi co-located" comprises: the first node assumes that all antenna ports of the second sub-signal and the RSs indicated by the other of the two TCI states are quasi co-located.

As one embodiment, the meaning of "the two TCI states that determine the quasi co-location parameter of the first signal depend on whether a physical cell identity associated with at least one of the first TCI state and the second TCI state is the same as a physical cell identity of the first serving cell" comprises: the two TCI states that determine the quasi co-location parameter of the first signal depend on whether there is a physical cell identity associated with one TCI state in the first TCI state and the second TCI state being the same as the physical cell identity of the first serving cell.

As one embodiment, the meaning of "the two TCI states that determine the quasi co-location parameter of the first signal depend on whether a physical cell identity associated with at least one of the first TCI state and the second TCI state is the same as a physical cell identity of the first serving cell" comprises: the two TCI states that determine the quasi co-location parameter of the first signal depend on whether the physical cell identities associated with the first TCI state and the second TCI state respectively are the same as the physical cell identity of the first serving cell.

As one embodiment, the meaning of "the two TCI states that determine the quasi co-location parameter of the first signal depend on whether a physical cell identity associated with at least one of the first TCI state and the second TCI state is the same as a physical cell identity of the first serving cell" comprises: when the physical cell identities associated with the first TCI state and the second TCI state respectively are both the same as the physical cell identity of the first serving cell, the first TCI state and the second TCI state are the two TCI states that determine the quasi co-location parameter of the first signal; when only one of the physical cell identities associated with the first TCI state and the second TCI state respectively is the same as the physical cell identity of the first serving cell, the first TCI state and the second TCI state are the two TCI states that determine the quasi co-location parameter of the first signal; and when the physical cell identities associated with the first TCI state and the second TCI state respectively are both different from the physical cell identity of the first serving cell, a third TCI state and a fourth TCI state are the two TCI states that determine the quasi co-location parameter of the first signal.

As one embodiment, the meaning of "the two TCI states that determine the quasi co-location parameter of the first signal depend on whether a physical cell identity associated with at least one of the first TCI state and the second TCI state is the same as a physical cell identity of the first serving cell" comprises: when the physical cell identities associated with the first TCI state and the second TCI state respectively are both the same as the physical cell identity of the first serving cell, the first TCI state and the second TCI state are the two TCI states that determine the quasi co-location parameter of the first signal; when only one of the physical cell identities associated with the first TCI state and the second TCI state respectively is the same as the physical cell identity of the first serving cell, the third TCI state and the fourth TCI state are the two TCI states that determine the quasi co-location parameter of the first signal; and when the physical cell identities associated with the first TCI state and the second TCI state respectively are both different from the physical cell identity of the first serving cell, the third TCI state and the fourth TCI state are the two TCI states that determine the quasi co-location parameter of the first signal.

As one embodiment, the physical cell identities associated with the first TCI state and the second TCI state respectively are the same; the meaning of "the two TCI states that determine the quasi co-location parameter of the first signal depend on whether a physical cell identity associated with at least one of the first TCI state and the second TCI state is the same as a physical cell identity of the first serving cell" comprises: when the physical cell identities associated with the first TCI state and the second TCI state respectively are both the same as the physical cell identity of the first serving cell, the first TCI state and the second TCI state are the two TCI states that determine the quasi co-location parameter of the first signal; and when the physical cell identities associated with the first TCI state and the second TCI state respectively are both different from the physical cell identity of the first serving cell, the third TCI state and the fourth TCI state are the two TCI states that determine the quasi co-location parameter of the first signal.

As one embodiment, at least one of the physical cell identities associated with the first TCI state and the second TCI state respectively is the same as the physical cell identity of the first serving cell; the two TCI states that determine the quasi co-location parameter of the first signal depend on whether the physical cell identities associated with the first TCI state and the second TCI state respectively are the same as the physical cell identity of the first serving cell; when the physical cell identities associated with the first TCI state and the second TCI state respectively are both the same as the physical cell identity of the first serving cell, the first TCI state and the second TCI state are the two TCI states that determine the quasi co-location parameter of the first signal; and when only one of the physical cell identities associated with the first TCI state and the second TCI state respectively is the same as the physical cell identity of the first serving cell, the third TCI state and the fourth TCI state are the two TCI states that determine the quasi co-location parameter of the first signal.

Typically, when configuration information of the first TCI state does not comprise an additionalPCI-r17 field, the first TCI state is associated with the physical cell identity of the first serving cell.

Typically, when configuration information of the second TCI state does not comprise the additionalPCI-r17 field, the second TCI state is associated with the physical cell identity of the first serving cell.

Typically, when the configuration information of the first TCI state comprises the additionalPCI-r17 field, the first TCI state is associated with one physical cell identity different from the physical cell identity of the first serving cell.

Typically, when the configuration information of the second TCI state comprises the additionalPCI-r17 field, the second TCI state is associated with one physical cell identity different from the physical cell identity of the first serving cell.

As one embodiment, one TCI state indicates one quasi co-location relationship.

As one embodiment, one TCI state indicates one or more reference signal resources.

As one embodiment, one TCI state indicates at least one reference signal resource.

As one embodiment, any reference signal resource indicated by one TCI state is one of an SRS (Sounding Reference Signal) resource, a CSI-RS (Channel State Information Reference Signal) resource, or an SS/PBCH (Synchronization Signal/Physical Broadcast Channel) block resource.

As one embodiment, any reference signal resource indicated by one TCI state is the CSI-RS resource or the SS/PBCH block resource.

As one embodiment, one TCI state indicates at least one reference signal resource and a quasi co-location (QCL) parameter corresponding to each reference signal resource.

As one embodiment, one TCI state indicates at least one reference signal resource and a type of the quasi co-location parameter corresponding to each reference signal resource.

As one embodiment, the type of the quasi co-location parameter comprises a TypeA, a TypeB, a TypeC, and a TypeD.

As one embodiment, the quasi co-location parameter of the TypeA comprises Doppler shift, Doppler spread, average delay, and delay spread.

As one embodiment, the quasi co-location parameter of the TypeB comprises the Doppler shift and the Doppler spread.

As one embodiment, the quasi co-location parameter of the TypeC comprises the Doppler shift and the average delay.

As one embodiment, the quasi co-location parameter of the TypeD comprises a spatial Rx parameter.

As one embodiment, for specific definitions of the TypeA, the TypeB, the TypeC and the TypeD, refer to Section 5.1.5 of 3GPP TS38.214.

As one embodiment, the quasi co-location parameter comprises one or more of the delay spread, the Doppler spread, the Doppler shift, the average delay, or the spatial Rx parameter.

As one embodiment, the quasi co-location parameter comprises the Doppler shift and the Doppler spread.

As one embodiment, the quasi co-location parameter comprises the Doppler shift and the average delay.

As one embodiment, the quasi co-location parameter comprises the spatial Rx parameter.

As one embodiment, the quasi co-location parameter comprises at least one of a spatial sending parameter or the spatial Rx parameter.

As one embodiment, the quasi co-location parameter comprises a spatial domain receive filter.

As one embodiment, the quasi co-location parameter comprises a spatial domain filter.

As one embodiment, the quasi co-location parameter comprises at least one of a spatial domain transmit filter or the spatial domain receive filter.

As one embodiment, a first node device comprises:
a first transmitter sending a second signal,
wherein a third DCI signaling is one DCI signaling carrying the first information block set; and an HARQ-ACK related to the third DCI signaling is carried by the second signal.

As one embodiment, the second signal is transported on a PUCCH (Physical Uplink Control CHannel), or the second signal is transported on a PUSCH (Physical Uplink Shared CHannel).

As one embodiment, when the third DCI signaling does not carry a downlink assignment (DL assignment), the HARQ-ACK related to the third DCI signaling is an HARQ-ACK corresponding to the third DCI signaling; and when the third DCI signaling schedules a PDSCH, the HARQ-ACK related to the third DCI signaling is an HARQ-ACK corresponding to the PDSCH scheduled by the third DCI signaling.

As one embodiment, the effect taking of the application of the first TCI state and the second TCI state depends on sending of the second signal.

As one embodiment, the second signal carries control information.

As one embodiment, the HARQ-ACK related to the third DCI signaling is an ACK.

As one embodiment, the HARQ-ACK related to the third DCI signaling indicates that the third DCI signaling is received correctly, or the third DCI signaling schedules the PDSCH (Physical Downlink Shared CHannel), and the HARQ-ACK related to the third DCI signaling indicates that the PDSCH scheduled by the third DCI signaling is received correctly.

As one embodiment, the HARQ-ACK related to the third DCI signaling is an ACK or an NACK.

As one embodiment, the HARQ-ACK related to the third DCI signaling indicates whether the third DCI signaling is received correctly, or the third DCI signaling schedules the PDSCH, and the HARQ-ACK related to the third DCI signaling indicates whether the PDSCH scheduled by the third DCI signaling is received correctly.

Typically, "an HARQ-ACK corresponding to the third DCI signaling" indicates whether the third DCI signaling is received correctly; and "an HARQ-ACK corresponding to the PDSCH scheduled by the third DCI signaling" indicates whether the PDSCH scheduled by the third DCI signaling is received correctly.

As one embodiment, a first receiver receives a third PDSCH, wherein the third DCI signaling schedules the third PDSCH, and the HARQ-ACK related to the third DCI signaling is an HARQ-ACK corresponding to the third PDSCH.

As one sub-embodiment of the above embodiments, a second transmitter in the present application sends the third PDSCH, wherein the third DCI signaling schedules the third PDSCH, and the HARQ-ACK related to the third DCI signaling is an HARQ-ACK corresponding to the third PDSCH.

As one sub-embodiment of the above embodiments, the third PDSCH carries one transport block (TB).

As one sub-embodiment of the above embodiments, the third DCI signaling indicates scheduling information of the third PDSCH; and the scheduling information of the third PDSCH at least comprises at least one of an occupied time domain resource, an occupied frequency domain resource, an MCS (Modulation and Coding Scheme), an antenna port, an HARQ (Hybrid Automatic Repeat reQuest) process number, an RV (Redundancy Version), an NDI (New Data Indicator), and a TCI state.

Typically, "an HARQ-ACK corresponding to the third PDSCH" indicates whether the third PDSCH is received correctly.

As one embodiment, the specific definition of the Transmission configuration indication field refers to Section 7.3 of 3GPP TS38.212.

As one embodiment, starting from a third moment, the first TCI state and the second TCI state are applied to the first signal in the first serving cell.

As one embodiment, the second signal is used for determining the third moment.

As one embodiment, the first signal is not earlier than the third moment.

As one embodiment, the first signaling is not earlier than the third moment.

As one embodiment, the first signaling is earlier than the third moment.

As one embodiment, the meaning of the sentence "the second signal is used for determining the third moment" comprises: the third moment is one moment that is at least a first interval value after a last symbol occupied by the second signal.

As one embodiment, the meaning of the sentence "the second signal is used for determining the third moment" comprises: the third moment is a starting moment of a first slot that is at least the first interval value after the last symbol occupied by the second signal.

As one embodiment, the meaning of the sentence "the second signal is used for determining the third moment" comprises: the third moment is a starting moment of a first slot that is at least the first interval value after a slot to which the second signal belongs in time domain.

As one embodiment, "after one symbol" refers to: later than the one symbol in time; and "after one moment" refers to: later than the one moment in time.

As one embodiment, "after one symbol" refers to: not earlier than the one symbol in time; and "after one moment" refers to: not earlier than the one moment in time.

As one embodiment, a unit of the first interval value is slot.

As one embodiment, the unit of the first interval value is symbol.

As one embodiment, the unit of the first interval value is ms (millisecond).

As one embodiment, the first interval value is a positive integer.

As one embodiment, the first interval value is a positive real number.

As one embodiment, the first interval value is fixed.

As one embodiment, the first interval value is reported by the first node.

As one embodiment, the first interval value is configured by a higher-level parameter.

As one embodiment, the first interval value is BeamAppTime_r17.

As one embodiment, the first interval value is configured by the higher-layer parameter: a beamAppTime-r17 parameter.

As one embodiment, a name of the higher-layer parameter configuring the first interval value comprises beamAppTime.

### Embodiment 2

Embodiment 2 illustrates a schematic diagram of a network architecture according to one embodiment of the present application, as shown in FIG. 2.

FIG. 2 illustrates a network architecture 200 of LTE (Long-Term Evolution), LTE-A (Long-Term Evolution Advanced), and future 5G systems. The network architecture 200 of the LTE, LTE-A, and future 5G systems is referred to as an EPS (Evolved Packet System) 200. The 5G NR or LTE network architecture 200 may be referred to as a 5GS (5G System)/EPS (Evolved Packet System) 200 or some other suitable terminologies. The 5GS/EPS 200 may comprise one or more pieces of UE (User Equipment) 201, one piece of UE241 performing sidelink communication with the UE201, an NG-RAN (Next Generation Radio Access Network)202, a 5GC (5G CoreNetwork)/EPC (Evolved Packet Core)210, an HSS (Home Subscriber Server)/UDM (Unified Data Management)220, and an Internet service 230. The 5GS/EPS200 may be interconnected with other access networks, but for simplicity, these entities/interfaces are not illustrated. As shown in FIG. 2, the 5GS/EPS200 provides a packet switching service, but those skilled in the art will readily appreciate that various concepts presented throughout the present application may be extended to networks providing a circuit switching service. The NG-RAN202 comprises an NR (New Radio) Node B (gNB) 203 and other gNBs 204. The gNB203 provides user and control plane protocol terminations toward the UE201. The gNB203 may be connected to other gNBs 204 via an Xn interface (e.g., backhaul). The gNB203 may also be referred to as a base station, a base transceiver station, a radio base station, a radio transceiving device, a transceiving device function, a basic service set (BSS), an extended service set (ESS), a TRP (transmitter receiver point), or some other suitable terminologies. The gNB203 provides an access point to the 5GC/EPC210 for the UE201. Examples of the UE201 comprise a cellular phone, a smart phone, a session initiation protocol (SIP) phone, a laptop, a personal digital assistant (PDA), a satellite radio, a global positioning system, a multimedia apparatus, a video apparatus, a digital audio player (e.g., an MP3 player), a camera, a game console, a drone, an aircraft, a narrowband physical network device, a machine type communication device, a land vehicle, an automobile, a wearable device, or any other similar functional apparatuses. Those skilled in the art may also refer to the UE201 as a mobile station, a subscriber station, a mobile unit, a subscriber unit, a wireless unit, a remote unit, a mobile apparatus, a wireless apparatus, a wireless communication apparatus, a remote apparatus, a mobile subscriber station, an access terminal, a mobile terminal, a wireless terminal, a remote terminal, a handset, a user agent, a mobile client, a client, or some other suitable terminologies. The gNB203 is connected to the 5GC/EPC210 via an S1/NG interface. The 5GC/EPC210 comprises an MME (Mobility Management Entity)/AMF (Authentication Management Field)/SMF (Session Management Function)211, other MME/AMF/SMF214, an S-GW (Service Gateway)/UPF (User Plane Function)212, and a P-GW (Packet Data Network Gateway)/UPF213. The MME/AMF/SMF211 is a control node that processes a signaling between the UE201 and the 5GC/EPC210. Generally, the MME/AMF/SMF211 provides bearer and connection management. All user IP (Internet Protocol) packets are transmitted by the S-GW/UPF212, and the S-GW/UPF212 is itself connected to the P-GW/UPF213. The P-GW provides UE IP address assignment and other functions. The P-GW/UPF213 is connected to the Internet service 230. The Internet service 230 comprises operator-corresponding Internet protocol services, which may specifically comprise the Internet, an intranet, an IMS (IP Multimedia Subsystem), and a packet switching service.

As one embodiment, a first node in the present application comprises the UE201.

As one embodiment, the first node in the present application comprises the UE241.

As one embodiment, a second node in the present application comprises the gNB203.

### Embodiment 3

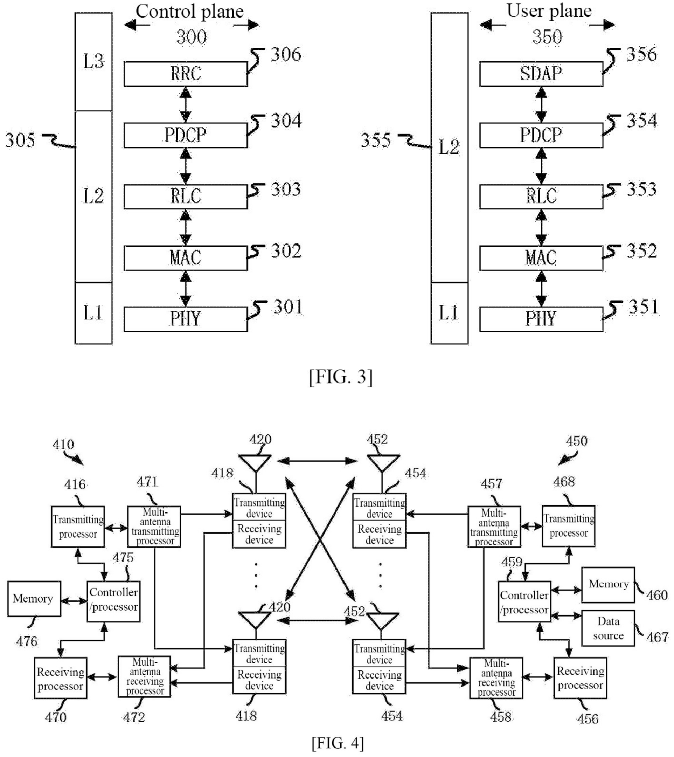

Embodiment 3 illustrates a schematic diagram of an embodiment of a wireless protocol architecture of a user plane and a control plane according to one embodiment of the present application, as shown in FIG. 3.

Embodiment 3 shows a schematic diagram of an embodiment of the wireless protocol architecture of one user plane and one control plane according to the present application, as shown in FIG. 3. FIG. 3 is a schematic diagram illustrating an embodiment of a radio protocol architecture for a user plane 350 and a control plane 300. FIG. 3 illustrates the radio protocol architecture of the control plane 300 used between a first communication node device (UE, a gNB, or an RSU in V2X) and a second communication node device (a gNB, UE, or an RSU in V2X), or between two pieces of UE using three layers: a Layer 1, a Layer 2, and a Layer 3. The Layer 1 (L1 layer) is the lowest layer and implements various PHY (physical layer) signal processing functions. The L1 layer will be referred to as a PHY301 herein. A Layer 2 (L2 layer) 305 is above the PHY301 and is responsible for a link between the first communication node device and the second communication node device, or between two pieces of UE. The L2 layer 305 comprises an MAC (Medium Access Control) sublayer 302, an RLC (Radio Link Control) sublayer 303, and a PDCP (Packet Data Convergence Protocol) sublayer 304, which terminate at the second communication node device. The PDCP sublayer 304 provides multiplexing between different radio bearers and logical channels. The PDCP sublayer 304 also provides security by encrypting data packets, and provides handover support for the first communication node device between the second communication node devices. The RLC sublayer 303 provides segmentation and reassembly of upper layer data packets, retransmission of lost data packets, and reordering of data packets to compensate for out-of-order reception due to an HARQ. The MAC sublayer 302 provides multiplexing between logical and transport channels. The MAC sublayer 302 is also responsible for assigning various radio resources (e.g., resource blocks) in one cell between the first communication node devices. The MAC sublayer 302 is also responsible for an HARQ operation. An RRC (Radio Resource Control) sublayer 306 in the Layer 3 (L3 layer) in the control plane 300 is responsible for obtaining radio resources (i.e., radio bearers) and configuring a lower layer using an RRC signaling between the second communication node device and the first communication node device. The radio protocol architecture of the user plane 350 comprises the Layer 1 (L1 layer) and the Layer 2 (L2 layer). The radio protocol architecture for the first communication node device and the second communication node device in the user plane 350 is substantially the same as corresponding layers and sublayers in the control plane 300 for a physical layer 351, a PDCP sublayer 354 in an L2 layer 355, an RLC sublayer 353 in the L2 layer 355, and an MAC sublayer 352 in the L2 layer 355, but the PDCP sublayer 354 also provides header compression for upper layer data packets to reduce radio transmission overhead. The L2 layer 355 in the user plane 350 also comprises an SDAP (Service Data Adaptation Protocol) sublayer 356, and the SDAP sublayer 356 is responsible for mapping between a QoS stream and a data radio bearer (DRB) to support the diversity of services. Although not shown in the figure, the first communication node device may have several upper layers above the L2 layer 355, comprising a network layer (e.g., an IP layer) terminating at a P-GW on a network side and an application layer terminating at another end (e.g., remote UE, a server, etc.) of connection.

As one embodiment, the wireless protocol architecture in FIG. 3 is applicable to a first node in the present application.

As one embodiment, the wireless protocol architecture in FIG. 3 is applicable to a second node in the present application.

As one embodiment, a first information block set is generated in the RRC sub-layer 306.

As one embodiment, the first information block set is generated in the MAC sub-layer 302.

As one embodiment, the first information block set is generated in the MAC sub-layer 352.

As one embodiment, the first information block set is generated in the PHY301 or a PHY351.

As one embodiment, a first signaling is generated in the PHY301 or the PHY351.

As one embodiment, a first signal is generated in the PHY301 or the PHY351.

As one embodiment, a second signal is generated in the PHY301 or the PHY351.

As one embodiment, a third signal is generated in the PHY301 or the PHY351.

### Embodiment 4

Embodiment 4 illustrates a schematic diagram of a first communication device and a second communication device according to one embodiment of the present application, as shown in FIG. 4. FIG. 4 is a block diagram of a first communication device 410 and a second communication device 450 communicating with each other in an access network.

The first communication device 410 comprises a controller/processor 475, a memory 476, a receiving processor 470, a transmitting processor 416, a multi-antenna receiving processor 472, a multi-antenna transmitting processor 471, a transmitting device/receiving device 418, and an antenna 420.

The second communication device 450 comprises a controller/processor 459, a memory 460, a data source 467, a transmitting processor 468, a receiving processor 456, a multi-antenna transmitting processor 457, a multi-antenna receiving processor 458, a transmitting device/receiving device 454, and an antenna 452.

In transportation from the first communication device 410 to the second communication device 450, at the first communication device 410, upper layer data packets from a core network are provided to the controller/processor 475. The controller/processor 475 implements the functionality of an L2 layer. In a DL, the controller/processor 475 provides header compression, encryption, packet segmentation, and reordering, multiplexing between logical and transport channels, and radio resource assignment to the second communication device 450 based on various priority metrics. The controller/processor 475 is also responsible for an HARQ operation and retransmission of a lost packet, and for signalings to the second communication device 450. The transmitting processor 416 and the multi-antenna transmitting processor 471 implement various signal processing functions for an L1 layer (i.e., a physical layer). The transmitting processor 416 implements encoding and interleaving to facilitate forward error correction (FEC) at the second communication device 450, as well as constellation mapping based on various modulation schemes (e.g., binary phase shift keying (BPSK), quadrature phase shift keying (QPSK), M-phase shift keying (M-PSK), and M-quadrature amplitude modulation (M-QAM)). The multi-antenna transmitting processor 471 performs digital spatial precoding, comprising codebook-based precoding and non-codebook-based precoding, and beamforming processing on coded and modulated symbols to generate one or more parallel streams. The transmitting processor 416 then maps each parallel stream to a subcarrier, multiplexes the modulated symbols with a reference signal (e.g., pilot) in time domain and/or frequency domain, and then uses an inverse fast Fourier transform (IFFT) to generate a physical channel carrying a time-domain multi-carrier symbol stream. The multi-antenna transmitting processor 471 then performs a sending analog precoding/beamforming operation on the time-domain multi-carrier symbol stream. Each transmitting device 418 converts a baseband multi-carrier symbol stream provided by the multi-antenna transmitting processor 471 into a radio frequency stream, and then provides it to different antennas 420.

In the transportation from the first communication device 410 to the second communication device 450, at the second communication device 450, each receiving device 454 receives a signal through its corresponding antenna 452. Each receiving device 454 recovers information modulated onto a radio frequency carrier, and converts a radio frequency stream into a baseband multi-carrier symbol stream and provides it to the receiving processor 456. The receiving processor 456 and the multi-antenna receiving processor 458 implement various signal processing functions of the L1 layer. The multi-antenna receiving processor 458 performs a receiving analog precoding/beamforming operation on the baseband multi-carrier symbol stream from the receiving device 454. The receiving processor 456 uses a Fast Fourier Transform (FFT) to convert the baseband multi-carrier symbol stream subjected to the receiving analog precoding/beamforming operation from the time domain to the frequency domain. In frequency domain, a physical layer data signal and the reference signal are demultiplexed by the receiving processor 456, wherein the reference signal will be used for channel estimation, and the data signal undergoes multi-antenna detection in the multi-antenna receiving processor 458 to recover any parallel stream destined for the second communication device 450. Symbols on each parallel stream are demodulated and recovered in the receiving processor 456, and soft decisions are generated. The receiving processor 456 then decodes and deinterleaves the soft decisions to recover upper layer data and control signals transmitted by the first communication device 410 on the physical channel. The upper layer data and control signals are then provided to the controller/processor 459. The controller/processor 459 implements functions of the L2 layer. The controller/processor 459 may be associated with the memory 460 that stores program codes and data. The memory 460 may be referred to as a computer-readable medium. In the DL (DownLink), the controller/processor 459 provides demultiplexing between transport and logical channels, packet reassembly, decryption, header decompression, and control signal processing to recover the upper layer data packets from the core network. The upper layer data packets are then provided to all protocol layers above the L2 layer. Various control signals may also be provided to an L3 for L3 processing. The controller/processor 459 is also responsible for error detection using an acknowledgment (ACK) and/or negative acknowledgment (NACK) protocol to support the HARQ operation.

In transportation from the second communication device 450 to the first communication device 410, at the second communication device 450, the data source 467 is used for providing the upper layer data packets to the controller/processor 459. The data source 467 represents all protocol layers above the L2 layer. Similar to a sending function at the first communication device 410 described in the DL, the controller/processor 459 implements header compression, encryption, packet segmentation and reordering, and multiplexing between logical and transport channels based on the radio resource assignment of the first communication device 410, and implements L2 layer functions for the user plane and the control plane. The controller/processor 459 is also responsible for an HARQ operation, retransmission of a lost packet, and for signalings to the first communication device 410. The transmitting processor 468 executes modulation mapping and channel coding processing, and the multi-antenna transmitting processor 457 performs digital multi-antenna spatial precoding, comprising codebook-based precoding and non-codebook-based precoding, and beamforming processing. Then, the transmitting processor 468 modulates a generated parallel stream into a multi-carrier/single-carrier symbol stream, which undergoes analog precoding/beamforming operations in the multi-antenna transmitting processor 457 and is then provided to different antennas 452 via the transmitting device 454. Each transmitting device 454 first converts a baseband symbol stream provided by the multi-antenna transmitting processor 457 into a radio frequency symbol stream, and then provides it to the antenna 452.

In the transportation from the second communication device 450 to the first communication device 410, a function at the first communication device 410 is similar to a receiving function at the second communication device 450 described in the transportation from the first communication device 410 to the second communication device 450. Each receiving device 418 receives a radio frequency signal through its corresponding antenna 420, converts the received radio frequency signal into a baseband signal, and provides the baseband signal to the multi-antenna receiving processor 472 and the receiving processor 470. The receiving processor 470 and the multi-antenna receiving processor 472 jointly implement functions of the L1 layer. The controller/processor 475 implements functions of the L2 layer. The controller/processor 475 may be associated with the memory 476 that stores program codes and data. The memory 476 may be referred to as a computer-readable medium. The controller/processor 475 provides multiplexing between transport and logical channels, packet reassembly, decryption, header decompression, and control signal processing to recover upper layer data packets from the second communication device 450. The upper layer data packets from the controller/processor 475 may be provided to the core network. The controller/processor 475 is also responsible for error detection using the ACK and/or NACK protocol to support the HARQ operation.

As one embodiment, the second communication device 450 comprises: at least one processor and at least one memory, the at least one memory comprising a computer program code; and the at least one memory and the computer program code are configured to be used together with the at least one processor. The second communication device 450 apparatus at least: receives a first information block set; receives a first signaling; and receives a first signal, wherein the first information block set indicates a first TCI state and a second TCI state, and the first TCI state and the second TCI state are two TCI states configured to a first serving cell; and the first signaling is used for scheduling or triggering the first signal, a quasi co-location parameter of the first signal is determined by the two TCI states, and the two TCI states that determine the quasi co-location parameter of the first signal depend on whether a physical cell identity associated with at least one of the first TCI state and the second TCI state is the same as a physical cell identity of the first serving cell.

As one embodiment, the second communication device 450 comprises: a memory storing a computer-readable instruction program, wherein the computer-readable instruction program generates actions when executed by at least one processor, and the actions comprise: receiving the first information block set; receiving the first signaling; and receiving the first signal, wherein the first information block set indicates the first TCI state and the second TCI state, and the first TCI state and the second TCI state are two TCI states configured to the first serving cell; and the first signaling is used for scheduling or triggering the first signal, the quasi co-location parameter of the first signal is determined by the two TCI states, and the two TCI states that determine the quasi co-location parameter of the first signal depend on whether the physical cell identity associated with at least one of the first TCI state and the second TCI state is the same as the physical cell identity of the first serving cell.

As one embodiment, the first communication device 410 comprises: at least one processor and at least one memory, the at least one memory comprising a computer program code; and the at least one memory and the computer program code are configured to be used together with the at least one processor. The first communication device 410 apparatus at least: sends the first information block set; sends the first signaling; and sends the first signal, wherein the first information block set indicates the first TCI state and the second TCI state, and the first TCI state and the second TCI state are two TCI states configured to the first serving cell; and the first signaling is used for scheduling or triggering the first signal, the quasi co-location parameter of the first signal is determined by the two TCI states, and the two TCI states that determine the quasi co-location parameter of the first signal depend on whether the physical cell identity associated with at least one of the first TCI state and the second TCI state is the same as the physical cell identity of the first serving cell.

As one embodiment, the first communication device 410 comprises: a memory storing a computer-readable instruction program, wherein the computer-readable instruction program generates actions when executed by at least one processor, and the actions comprise: sending the first information block set; sending the first signaling; and sending the first signal, wherein the first information block set indicates the first TCI state and the second TCI state, and the first TCI state and the second TCI state are two TCI states configured to the first serving cell; and the first signaling is used for scheduling or triggering the first signal, the quasi co-location parameter of the first signal is determined by the two TCI states, and the two TCI states that determine the quasi co-location parameter of the first signal depend on whether the physical cell identity associated with at least one of the first TCI state and the second TCI state is the same as the physical cell identity of the first serving cell.

As one embodiment, a first node in the present application comprises the second communication device 450.

As one embodiment, a second node in the present application comprises the first communication device 410.

As one embodiment, at least one of {the antenna 452, the receiving device 454, the receiving processor 456, the multi-antenna receiving processor 458, the controller/processor 459, the memory 460, and the data source 467} is used for receiving the first information block set in the present application; and at least one of {the antenna 420, the transmitting device 418, the transmitting processor 416, the multi-antenna transmitting processor 471, the controller/processor 475, and the memory 476} is used for sending the first information block set in the present application.

As one embodiment, at least one of {the antenna 452, the receiving device 454, the receiving processor 456, the multi-antenna receiving processor 458, the controller/processor 459, the memory 460, and the data source 467} is used for receiving the first signaling in the present application; and at least one of {the antenna 420, the transmitting device 418, the transmitting processor 416, the multi-antenna transmitting processor 471, the controller/processor 475, and the memory 476} is used for sending the first signaling in the present application.

As one embodiment, at least one of {the antenna 452, the receiving device 454, the receiving processor 456, the multi-antenna receiving processor 458, the controller/processor 459, the memory 460, and the data source 467} is used for receiving the first signal in the present application; and at least one of {the antenna 420, the transmitting device 418, the transmitting processor 416, the multi-antenna transmitting processor 471, the controller/processor 475, and the memory 476} is used for sending the first signal in the present application.

As one embodiment, at least one of {the antenna 452, the transmitting device 454, the transmitting processor 468, the multi-antenna transmitting processor 457, the controller/processor 459, and the memory 460} is used for sending a second signal in the present application; and at least one of {the antenna 420, the receiving device 418, the receiving processor 470, the multi-antenna receiving processor 472, the controller/processor 475, and the memory 476} is used for receiving the second signal in the present application.

As one embodiment, at least one of {the antenna 452, the transmitting device 454, the transmitting processor 468, the multi-antenna transmitting processor 457, the controller/processor 459, and the memory 460} is used for sending a third signal in the present application; and at least one of {the antenna 420, the receiving device 418, the receiving processor 470, the multi-antenna receiving processor 472, the controller/processor 475, and the memory 476} is used for receiving the third signal in the present application.

### Embodiment 5

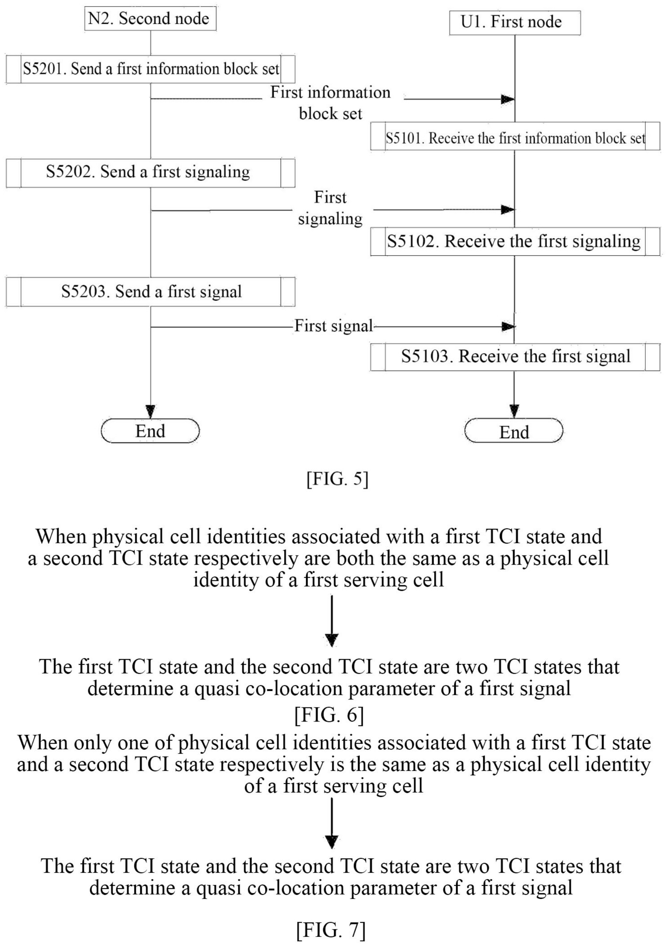

Embodiment 5 illustrates a flowchart of wireless transmission according to one embodiment of the present application, as shown in FIG. 5. In FIG. 5, a first node U1 and a second node N2 are two communication nodes transported through an air interface, respectively.

For the first node U1, in step S5101, a first information block set is received; in step S5102, a first signaling is received; and in step S5103, a first signal is received.

For the second node N2, in step S5201, the first information block set is sent; in step S5202, the first signaling is sent; and in step S5203, the first signal is sent.

In Embodiment 5, the first information block set indicates a first TCI state and a second TCI state, wherein the first TCI state and the second TCI state are two TCI states configured to a first serving cell; and the first signaling is used for scheduling or triggering the first signal, a quasi co-location parameter of the first signal is determined by the two TCI states, and the two TCI states that determine the quasi co-location parameter of the first signal depend on whether a physical cell identity associated with at least one of the first TCI state and the second TCI state is the same as a physical cell identity of the first serving cell.

As one embodiment, the first node U1 is a first node in the present application.

As one embodiment, the second node N2 is a second node in the present application.

As one embodiment, an air interface between the second node N2 and the first node U1 comprises a wireless interface between a base station device and user equipment.

As one embodiment, the air interface between the second node N2 and the first node U1 comprises a wireless interface between a relay node device and user equipment.

As one embodiment, the air interface between the second node N2 and the first node U1 comprises a wireless interface between user equipment and user equipment.

As one embodiment, the first information block set is transported in a PDSCH (Physical downlink shared channel).

As one embodiment, the first information block set is transported in a PDCCH (Physical Downlink Control Channel).

As one embodiment, the first signaling is transported in a PDCCH.

As one embodiment, the first signal is transported in a PDSCH.

As one embodiment, a first node device comprises:
a first transmitter sending a second signal,
wherein a third DCI signaling is one DCI signaling carrying the first information block set; and an HARQ-ACK related to the third DCI signaling is carried by the second signal.

As one embodiment, a second node device also comprises:
a second receiver receiving the second signal,
wherein the third DCI signaling is one DCI signaling carrying the first information block set; and the HARQ-ACK related to the third DCI signaling is carried by the second signal.

As one embodiment, the first node device also comprises:
the first transmitter transmitting a third signal,
wherein the first signal is a PDSCH, and the third signal is used for indicating whether the first signal is received correctly; or the first signal is an aperiodic CSI-RS, and the third signal comprises CSI (Channel State Information) obtained through measurement and calculation for the first signal.

As one sub-embodiment of the above embodiments, the second node device also comprises:
the second receiver receiving the third signal,
wherein the first signal is a PDSCH, and the third signal is used for indicating whether the first signal is received correctly; or the first signal is an aperiodic CSI-RS, and the third signal comprises the CSI (Channel State Information) obtained through measurement and calculation for the first signal.

As one sub-embodiment of the above embodiments, the third signal is transported on a PUSCH.

As one sub-embodiment of the above embodiments, the third signal is transported on a PUCCH.

As one embodiment, the meaning of the sentence "a given TCI state is used for determining a quasi co-location parameter of a given signal" comprises: the given signal is a PDSCH, and a DMRS port of the given signal and at least one reference signal resource indicated by the given TCI state are quasi co-located.

As one embodiment, the meaning of the sentence "a given TCI state is used for determining a quasi co-location parameter of a given signal" comprises: the same quasi co-location parameter is used for receiving the given signal and the at least one reference signal resource indicated by the given TCI state.

As one embodiment, the meaning of the sentence "the same quasi co-location parameter is used for receiving the given signal and the at least one reference signal resource indicated by the given TCI state" comprises: the first node assumes that the same quasi co-location parameter is used for receiving the given signal and the at least one reference signal resource indicated by the given TCI state.

As one embodiment, the meaning of the sentence "a given TCI state is used for determining a quasi co-location parameter of a given signal" comprises: the same quasi co-location parameter is used for sending the given signal and the at least one reference signal resource indicated by the given TCI state.

As one embodiment, the meaning of the sentence "the same quasi co-location parameter is used for receiving the given signal and the at least one reference signal resource indicated by the given TCI state" comprises: the first node assumes that the same quasi co-location parameter is used for sending the given signal and the at least one reference signal resource indicated by the given TCI state.

As one embodiment, the meaning of the sentence "a given TCI state is used for determining a quasi co-location parameter of a given signal" comprises: the given TCI state is used for determining a quasi co-location parameter of an antenna port of the given signal.

As one embodiment, the meaning of the sentence "a given TCI state is used for determining a quasi co-location parameter of a given signal" comprises: the given signal is a PDSCH, and the given TCI state is used for determining a quasi co-location parameter of a DMRS (DeModulation Reference Signal) port of the given signal.

As one embodiment, the meaning of the sentence "a given TCI state is used for determining a quasi co-location parameter of a given signal" comprises: the given TCI state indicates a quasi co-location relationship between the at least one reference signal resource and the antenna port of the given signal.

As one embodiment, the meaning of the sentence "a given TCI state is used for determining a quasi co-location parameter of a given signal" comprises: the given signal is a PDSCH, and the given TCI state indicates a quasi co-location relationship between the at least one reference signal resource and the DMRS port of the given signal.

As one embodiment, the meaning of the sentence "a given TCI state is used for determining a quasi co-location parameter of a given signal" comprises: the antenna port of the given signal and the at least one reference signal resource indicated by the given TCI state are quasi co-located.

As one embodiment, the meaning of the sentence "the antenna port of the given signal and the at least one reference signal resource indicated by the given TCI state are quasi co-located" comprises: the first node assumes that the antenna port of the given signal and the at least one reference signal resource indicated by the given TCI state are quasi co-located.

As one embodiment, the meaning of the sentence "the DMRS port of the given signal and the at least one reference signal resource indicated by the given TCI state are quasi co-located" comprises: the first node assumes that the DMRS port of the given signal and the at least one reference signal resource indicated by the given TCI state are quasi co-located.

As one embodiment, the meaning of the sentence "a given TCI state is used for determining a quasi co-location parameter of a given signal" comprises: the same quasi co-location parameter is used for receiving the given signal and for receiving or sending the at least one reference signal resource indicated by the given TCI state.

As one embodiment, the meaning of the sentence "the same quasi co-location parameter is used for receiving the given signal and for receiving or sending the at least one reference signal resource indicated by the given TCI state" comprises: the first node assumes that the same quasi co-location parameter is used for receiving the given signal and for receiving or sending the at least one reference signal resource indicated by the given TCI state.

As one embodiment, the meaning of the sentence "a given TCI state is used for determining a quasi co-location parameter of a given signal" comprises: the same quasi co-location parameter is used for receiving or sending the given signal and for receiving or sending the at least one reference signal resource indicated by the given TCI state.

As one embodiment, the meaning of the sentence "the same quasi co-location parameter is used for receiving or sending the given signal and for receiving or sending the at least one reference signal resource indicated by the given TCI state" comprises: the first node assumes that the same quasi co-location parameter is used for receiving or sending the given signal and for receiving or sending the at least one reference signal resource indicated by the given TCI state.

As one embodiment, the given TCI state is at least one of the first TCI state or the second TCI state, and the given signal is a PDSCH in the first serving cell.

As one embodiment, the given TCI state is the first TCI state, and the given signal is the first signal.

As one embodiment, the given TCI state is the second TCI state, and the given signal is the first signal.

As one embodiment, the given TCI state is one TCI state in which physical cell identities associated with the first TCI state and the second TCI state are the same as the physical cell identity of the first serving cell, and the given signal is the first signal.

As one embodiment, at least one of the first TCI state or the second TCI state is applied to the PDSCH in the first serving cell.

As one embodiment, the first TCI state and the second TCI state are applied to the PDSCH in the first serving cell.

As one embodiment, at least one of the first TCI state or the second TCI state is applied to the PDSCH and a PDCCH in the first serving cell.

As one embodiment, the first TCI state and the second TCI state are applied to the PDSCH and the PDCCH in the first serving cell.

As one embodiment, starting from a third moment, at least one of the first TCI state or the second TCI state is applied to the PDSCH in the first serving cell; and the second signal is used for determining the third moment.

As one embodiment, starting from the third moment, the first TCI state and the second TCI state are applied to the PDSCH in the first serving cell; and the second signal is used for determining the third moment.

As one embodiment, starting from the third moment, at least one of the first TCI state or the second TCI state is applied to the PDSCH and the PDCCH in the first serving cell; and the second signal is used for determining the third moment.

As one embodiment, starting from the third moment, the first TCI state and the second TCI state are applied to the PDSCH and the PDCCH in the first serving cell; and the second signal is used for determining the third moment.

As one embodiment, at least one of the first TCI state or the second TCI state is used for determining a quasi co-location parameter of a DMRS (DeModulation Reference Signal) port of the PDSCH in the first serving cell.

As one embodiment, at least one of the first TCI state or the second TCI state is used for indicating the quasi co-location parameter of the DMRS (DeModulation Reference Signal) port of the PDSCH in the first serving cell.

As one embodiment, at least one of the first TCI state or the second TCI state indicates a quasi co-location relationship between at least one reference signal resource and the DMRS port of the PDSCH in the first serving cell.

As one embodiment, the DMRS port of the PDSCH in the first serving cell and at least one reference signal resource indicated by at least one of the first TCI state or the second TCI state are quasi co-located.

As one embodiment, the first signal is an aperiodic CSI-RS.

As one embodiment, the first signal is a PDSCH.

As one embodiment, the first signaling is a DCI signaling of the first serving cell.

As one embodiment, the first signaling is a DCI signaling of one serving cell other than the first serving cell. Typically, the first signal is a PDSCH of the first serving cell.

As one embodiment, the first node first determines a target TCI state from the first TCI state and the second TCI state, and then determines the quasi co-location parameter of the first signal based on whether a physical cell identity associated with the target TCI state is the same as the physical cell identity of the first serving cell.

As one embodiment, the first node device comprises:
a first receiver determines the target TCI state from the first TCI state and the second TCI state.

As one embodiment, a method in the first node comprises:
determining the target TCI state from the first TCI state and the second TCI state.

As one embodiment, the target TCI state is the first TCI state.

As one embodiment, the target TCI state is the first TCI state, and the first TCI state is a first TCI state in the first TCI state and the second TCI state.

As one embodiment, the first information block set comprises a Transmission configuration indication field in one DCI signaling, the Transmission configuration indication field comprised in the first information block set indicates the first TCI state and the second TCI state, and the first TCI state is a first TCI state indicated by the Transmission configuration indication field comprised in the first information block set; and the target TCI state is the first TCI state.

As one embodiment, the first information block set comprises the Transmission configuration indication field in one DCI signaling, and the Transmission configuration indication field comprised in the first information block set indicates the first TCI state and the second TCI state.

As one sub-embodiment of the above embodiments, the first TCI state is a first TCI state indicated by the Transmission configuration indication field comprised in the first information block set, and the second TCI state is a second TCI state indicated by the Transmission configuration indication field comprised in the first information block set.

As one sub-embodiment of the above embodiments, the first TCI state is a first TCI state in the first TCI state and the second TCI state.

As one embodiment, a CORESET to which the first signaling belongs belongs to one of a first CORESET pool or a second CORESET pool, and a target CORESET pool is one CORESET pool comprising the CORESET to which the first signaling belongs in the first CORESET pool and the second CORESET pool; when the target CORESET pool is the first CORESET pool, the target TCI state is the first TCI state; and when the target CORESET pool is the second CORESET pool, the target TCI state is the second TCI state.

### Embodiment 6

Embodiment 6 illustrates a schematic diagram of a relationship between a quasi co-location parameter of a first signal and physical cell identities associated with a first TCI state and a second TCI state respectively according to one embodiment of the present application, as shown in FIG. 6.

In Embodiment 6, when the physical cell identities associated with the first TCI state and the second TCI state respectively are both the same as a physical cell identity of a first serving cell, the first TCI state and the second TCI state are two TCI states that determine the quasi co-location parameter of the first signal.

Typically, when configuration information of the first TCI state does not comprise an additionalPCI-r17 field, the first TCI state is associated with the physical cell identity of the first serving cell; and when configuration information of the second TCI state does not comprise the additionalPCI-r17 field, the second TCI state is associated with the physical cell identity of the first serving cell.

As one embodiment, the meaning of "a given TCI state is associated with a given physical cell identity" comprises: one reference signal resource indicated by the given TCI state is associated with the given physical cell identity.

As one embodiment, the meaning of "a given TCI state is associated with a given physical cell identity" comprises: the given physical cell identity is used for generating one reference signal resource indicated by the given TCI state.

As one embodiment, the meaning of "a given TCI state is associated with a given physical cell identity" comprises: one reference signal resource indicated by the given TCI state is associated with a cell identified by the given physical cell identity.

As one embodiment, the meaning of "a given TCI state is associated with a given physical cell identity" comprises: one reference signal resource indicated by the given TCI state belongs to or is configured to the cell identified by the given physical cell identity.

As one embodiment, the meaning of "a given TCI state is associated with a given physical cell identity" comprises: one reference signal resource indicated by the given TCI state is sent by the cell identified by the given physical cell identity.

As one embodiment, the meaning of "a given TCI state is associated with a given physical cell identity" comprises: one reference signal resource indicated by the given TCI state and one reference signal resource in the cell identified by the given physical cell identity are quasi co-located.

As one embodiment, the meaning of "a given TCI state is associated with a given physical cell identity" comprises: one reference signal resource indicated by the given TCI state and an SS/PBCH block resource in the cell identified by the given physical cell identity are quasi co-located.

As one embodiment, the meaning of "a given TCI state is associated with a given physical cell identity" comprises: the same quasi co-location parameter is used for receiving one reference signal resource indicated by the given TCI state and one reference signal resource in the cell identified by the given physical cell identity.

As one embodiment, the meaning of "a given TCI state is associated with a given physical cell identity" comprises: the same quasi co-location parameter is used for receiving one reference signal resource indicated by the given TCI state and one SS/PBCH block resource in the cell identified by the given physical cell identity.

As one embodiment, the given TCI state is the first TCI state, and the given physical cell identity is the physical cell identity of the first serving cell.

As one embodiment, the given TCI state is the second TCI state, and the given physical cell identity is the physical cell identity of the first serving cell.

### Embodiment 7

Embodiment 7 illustrates a schematic diagram of a relationship between a quasi co-location parameter of a first signal and physical cell identities associated with a first TCI state and a second TCI state respectively according to another embodiment of the present application, as shown in FIG. 7.

In Embodiment 7, when only one of the physical cell identities associated with the first TCI state and the second TCI state respectively is the same as a physical cell identity of a first serving cell, the first TCI state and the second TCI state are two TCI states that determine the quasi co-location parameter of the first signal.

Typically, when configuration information of the first TCI state comprises one field whose name comprises additionalPCI, the first TCI state is associated with one physical cell identity different from the physical cell identity of the first serving cell; and when configuration information of the second TCI state does not comprise one field whose name comprises additionalPCI, the second TCI state is associated with the physical cell identity of the first serving cell.

Typically, when the configuration information of the first TCI state does not comprise one field whose name comprises additionalPCI, the first TCI state is associated with the physical cell identity of the first serving cell; and when the configuration information of the second TCI state comprises one field whose name comprises additionalPCI, the second TCI state is associated with one physical cell identity different from the physical cell identity of the first serving cell.

As one embodiment, only a physical cell identity associated with the first TCI state in the first TCI state and the second TCI state is the same as the physical cell identity of the first serving cell, and the first TCI state is used for determining the quasi co-location parameter of the first signal.

As one embodiment, only a physical cell identity associated with the second TCI state in the first TCI state and the second TCI state is the same as the physical cell identity of the first serving cell, and the second TCI state is used for determining the quasi co-location parameter of the first signal.

As one embodiment, when only the physical cell identity associated with the first TCI state in the first TCI state and the second TCI state is the same as the physical cell identity of the first serving cell, the first TCI state and the second TCI state are the two TCI states that determine the quasi co-location parameter of the first signal.

As one embodiment, when only the physical cell identity associated with the second TCI state in the first TCI state and the second TCI state is the same as the physical cell identity of the first serving cell, the first TCI state and the second TCI state are the two TCI states that determine the quasi co-location parameter of the first signal.

As one embodiment, when the physical cell identity associated with the first TCI state is the same as the physical cell identity of the first serving cell, and the physical cell identity associated with the second TCI state is different from the physical cell identity of the first serving cell, the first TCI state and the second TCI state are the two TCI states that determine the quasi co-location parameter of the first signal.

As one embodiment, when the physical cell identity associated with the first TCI state is different from the physical cell identity of the first serving cell, and the physical cell identity associated with the second TCI state is the same as the physical cell identity of the first serving cell, the first TCI state and the second TCI state are the two TCI states that determine the quasi co-location parameter of the first signal.

As one embodiment, the meaning of "a given TCI state is associated with a given physical cell identity" comprises: one reference signal resource indicated by the given TCI state is associated with the given physical cell identity.

As one embodiment, the meaning of "a given TCI state is associated with a given physical cell identity" comprises: the given physical cell identity is used for generating one reference signal resource indicated by the given TCI state.

As one embodiment, the meaning of "a given TCI state is associated with a given physical cell identity" comprises: one reference signal resource indicated by the given TCI state is associated with a cell identified by the given physical cell identity.

As one embodiment, the meaning of "a given TCI state is associated with a given physical cell identity" comprises: one reference signal resource indicated by the given TCI state belongs to or is configured to the cell identified by the given physical cell identity.

As one embodiment, the meaning of "a given TCI state is associated with a given physical cell identity" comprises: one reference signal resource indicated by the given TCI state is sent by the cell identified by the given physical cell identity.

As one embodiment, the meaning of "a given TCI state is associated with a given physical cell identity" comprises: one reference signal resource indicated by the given TCI state and one reference signal resource in the cell identified by the given physical cell identity are quasi co-located.

As one embodiment, the meaning of "a given TCI state is associated with a given physical cell identity" comprises: one reference signal resource indicated by the given TCI state and an SS/PBCH block resource in the cell identified by the given physical cell identity are quasi co-located.

As one embodiment, the meaning of "a given TCI state is associated with a given physical cell identity" comprises: the same quasi co-location parameter is used for receiving one reference signal resource indicated by the given TCI state and one reference signal resource in the cell identified by the given physical cell identity.

As one embodiment, the meaning of "a given TCI state is associated with a given physical cell identity" comprises: the same quasi co-location parameter is used for receiving one reference signal resource indicated by the given TCI state and one SS/PBCH block resource in the cell identified by the given physical cell identity.

As one embodiment, the given TCI state is the first TCI state, and the given physical cell identity is the physical cell identity of the first serving cell or one physical cell identity different from the physical cell identity of the first serving cell.

As one embodiment, the given TCI state is the second TCI state, and the given physical cell identity is the physical cell identity of the first serving cell or one physical cell identity different from the physical cell identity of the first serving cell.

### Embodiment 8

Embodiment 8 illustrates a schematic diagram of a relationship between a quasi co-location parameter of a first signal and physical cell identities associated with a first TCI state and a second TCI state respectively according to still another embodiment of the present application, as shown in FIG. 7.

In Embodiment 8, when the physical cell identities associated with the first TCI state and the second TCI state respectively are both different from a physical cell identity of a first serving cell, a third TCI state and a fourth TCI state are two TCI states that determine the quasi co-location parameter of the first signal.

Typically, when configuration information of the first TCI state comprises an additionalPCI-r17 field, the first TCI state is associated with one physical cell identity different from the physical cell identity of the first serving cell; and when configuration information of the second TCI state comprises the additionalPCI-r17 field, the second TCI state is associated with one physical cell identity different from the physical cell identity of the first serving cell.

As one embodiment, the meaning of "a given TCI state is associated with a given physical cell identity" comprises: one reference signal resource indicated by the given TCI state is associated with the given physical cell identity.

As one embodiment, the meaning of "a given TCI state is associated with a given physical cell identity" comprises: the given physical cell identity is used for generating one reference signal resource indicated by the given TCI state.

As one embodiment, the meaning of "a given TCI state is associated with a given physical cell identity" comprises: one reference signal resource indicated by the given TCI state is associated with a cell identified by the given physical cell identity.

As one embodiment, the meaning of "a given TCI state is associated with a given physical cell identity" comprises: one reference signal resource indicated by the given TCI state belongs to or is configured to the cell identified by the given physical cell identity.

As one embodiment, the meaning of "a given TCI state is associated with a given physical cell identity" comprises: one reference signal resource indicated by the given TCI state is sent by the cell identified by the given physical cell identity.

As one embodiment, the meaning of "a given TCI state is associated with a given physical cell identity" comprises: one reference signal resource indicated by the given TCI state and one reference signal resource in the cell identified by the given physical cell identity are quasi co-located.

As one embodiment, the meaning of "a given TCI state is associated with a given physical cell identity" comprises: one reference signal resource indicated by the given TCI state and an SS/PBCH block resource in the cell identified by the given physical cell identity are quasi co-located.

As one embodiment, the meaning of "a given TCI state is associated with a given physical cell identity" comprises: the same quasi co-location parameter is used for receiving one reference signal resource indicated by the given TCI state and one reference signal resource in the cell identified by the given physical cell identity.

As one embodiment, the meaning of "a given TCI state is associated with a given physical cell identity" comprises: the same quasi co-location parameter is used for receiving one reference signal resource indicated by the given TCI state and one SS/PBCH block resource in the cell identified by the given physical cell identity.

As one embodiment, the given TCI state is the first TCI state, and the given physical cell identity is one physical cell identity different from the physical cell identity of the first serving cell.

As one embodiment, the given TCI state is the second TCI state, and the given physical cell identity is one physical cell identity different from the physical cell identity of the first serving cell.

As one embodiment, at least one of a physical cell identity associated with the third TCI state and a physical cell identity associated with the fourth TCI state respectively is the same as the physical cell identity of the first serving cell.

As one embodiment, the meaning of "at least one of a physical cell identity associated with the third TCI state and a physical cell identity associated with the fourth TCI state respectively is the same as the physical cell identity of the first serving cell" comprises: a first node does not expect that the physical cell identity associated with the third TCI state and the physical cell identity associated with the fourth TCI state respectively are both different from the physical cell identity of the first serving cell.

As one embodiment, the physical cell identity associated with the third TCI state and the physical cell identity associated with the fourth TCI state respectively are the same as the physical cell identity of the first serving cell.

As one embodiment, at least one of the third TCI state or the fourth TCI state is different from the first TCI state and the second TCI state.

As one embodiment, the third TCI state and the fourth TCI state are different from the first TCI state and the second TCI state.

As one embodiment, the third TCI state and the fourth TCI state are predefined.

As one embodiment, the third TCI state and the fourth TCI state are pre-configured.

As one embodiment, the third TCI state and the fourth TCI state are configurable.

As one embodiment, the third TCI state and the fourth TCI state are TCI states applied by one CORESET.

As one embodiment, the third TCI state and the fourth TCI state are TCI states applied by a CORESET associated with one CSS.

### Embodiment 9A to Embodiment 9B

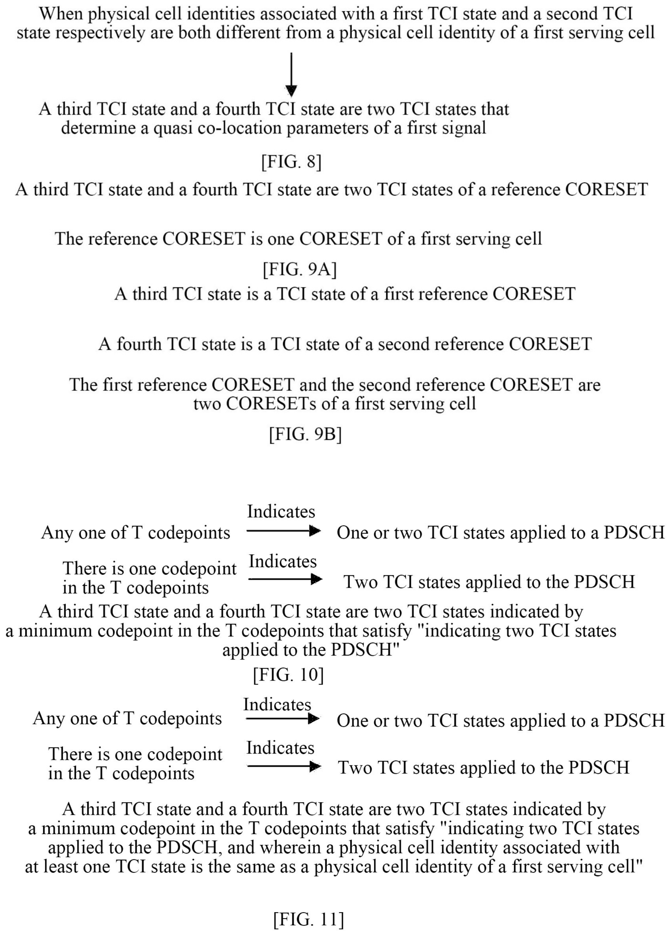

Embodiment 9A to Embodiment 9B respectively illustrate schematic diagrams of a third TCI state and a fourth TCI state according to one embodiment of the present application, as shown in FIG. 9A to FIG. 9B.

In Embodiment 9A, the third TCI state and the fourth TCI state are two TCI states of a reference CORESET, and the reference CORESET is one CORESET of a first serving cell.

In Embodiment 9B, the third TCI state is a TCI state of a first reference CORESET, the fourth TCI state is a TCI state of a second reference CORESET, and the first reference CORESET and the second reference CORESET are two CORESETs of the first serving cell.

As one embodiment, the third TCI state and the fourth TCI state are the two TCI states of the reference CORESET, and the reference CORESET is a CORESET of a minimum index which is associated with one monitored search space and has the number of TCI states equal to 2, in one most recent slot in which a first node monitors one or more CORESETs of the first serving cell, and wherein the number of TCI states of at least one CORESET is equal to 2.

As one embodiment, the third TCI state and the fourth TCI state are the two TCI states of the reference CORESET, and the reference CORESET is a CORESET of the minimum index which is associated with one monitored search space and has the number of TCI states equal to 2, and wherein a physical cell identity associated with at least one TCI state is the same as a physical cell identity of the first serving cell, in a most recent slot in which "the first node monitors one or more CORESETs of the first serving cell, and wherein at least one CORESET satisfies that the number of TCI states is equal to 2 and wherein the physical cell identity associated with at least one TCI state is the same as the physical cell identity of the first serving cell".

As one embodiment, the third TCI state is the TCI state of the first reference CORESET, and the fourth TCI state is the TCI state of the second reference CORESET; the first reference CORESET is a CORESET of the minimum index which is associated with one monitored search space and belongs to a first CORESET pool, in a most recent slot in which the first node monitors one or more CORESETs belonging to the first CORESET pool; the second reference CORESET is a CORESET of the minimum index which is associated with one monitored search space and belongs to a second CORESET pool, in a most recent slot in which the first node monitors one or more CORESETs belonging to the second CORESET pool; and the first CORESET pool comprises at least one CORESET, the second CORESET pool comprises at least one CORESET, and the first CORESET pool and the second CORESET pool comprise different CORESETs of the first serving cell respectively.

As one embodiment, the third TCI state is the TCI state of the first reference CORESET, and the fourth TCI state is the TCI state of the second reference CORESET; the first reference CORESET is a CORESET of the minimum index which is associated with one monitored search space, belongs to the first CORESET pool, and has a physical cell identity associated with a TCI state being the same as the physical cell identity of the first serving cell, in a most recent slot satisfying "the first node monitors one or more CORESETs belonging to the first CORESET pool, and wherein a physical cell identity associated with the TCI state of the at least one CORESET is the same as the physical cell identity of the first serving cell"; the second reference CORESET is a CORESET of the minimum index which is associated with one monitored search space, belongs to the second CORESET pool, and has a physical cell identity associated with a TCI state being the same as the physical cell identity of the first serving cell, in one most recent slot satisfying "the first node monitors one or more CORESETs belonging to the second CORESET pool, and wherein a physical cell identity associated with the TCI state of the at least one CORESET is the same as the physical cell identity of the first serving cell"; and the first CORESET pool comprises at least one CORESET, the second CORESET pool comprises at least one CORESET, and the first CORESET pool and the second CORESET pool comprise different CORESETs of the first serving cell respectively.

As one embodiment, a first receiver receives a second information block set, wherein the second information block set is carried by a higher-layer signaling, and the second information block set is used for configuring N CORESETs of the first serving cell, N being a positive integer greater than 1; and any one of the N CORESETs belongs to one of the first CORESET pool or the second CORESET pool, at least one of the N CORESETs belongs to the first CORESET pool, at least one of the N CORESETs belongs to the second CORESET pool, the first CORESET pool comprises at least one CORESET, the second CORESET pool comprises at least one CORESET, and the first CORESET pool and the second CORESET pool are different.

Typically, the second information block set is used for configuring N CORESETs of a first BWP of the first serving cell.

As one embodiment, the second information block set comprises part of or all fields in one RRC IE.

As one embodiment, the second information block set comprises a plurality of RRC IEs.

As one embodiment, the second information block set comprises N RRC IE ControlResourceSets, and the N RRC IE ControlResourceSets are respectively used for configuring the N CORESETs (Control Resource Sets) of the first serving cell.

As one embodiment, the second information block set comprises part of or all fields in RRC IE PDCCH-Config.

As one embodiment, the second information block set comprises a field whose name comprises controlResourceSetToAddModList in the RRC IE PDCCH-Config.

As one embodiment, the second information block set comprises a field whose name comprises controlResourceSetToAddModList and a field whose name comprises controlResourceSetToReleaseList in the RRC IE PDCCH-Config.

As one embodiment, one CORESET (Control Resource Set) comprises a plurality of REs (Resource Elements).

As one embodiment, one CORESET (Control Resource Set) comprises at least one CCE (Control Channel Element).

As one embodiment, one CCE comprises 9 REGs (Resource Element Groups), and one REG comprises 4 REs.

As one embodiment, one CCE comprises 6 REGs, and one REG comprises 12 REs.

As one embodiment, one CORESET is configured by the RRC IE (Information Element) ControlResourceSet.

As one embodiment, a specific definition of the CORESET refers to Section 10 of 3GPP TS 38.213.

As one embodiment, the specific definition of the RRC IE ControlResourceSet refers to Section 6.3.2 of 3GPP TS 38.331.

As one embodiment, one PDCCH candidate in one CORESET belongs to the one CORESET in frequency domain.

As one embodiment, one PDCCH candidate in one CORESET is one PDCCH candidate in a search space set associated with the one CORESET.

As one embodiment, one PDCCH candidate in one CORESET is composed of at least one CCE in the one CORESET.

As one embodiment, any PDCCH candidate in a search space set associated with one CORESET is composed of at least one CCE in the one CORESET.

As one embodiment, one PDCCH candidate in a search space set associated with a given CORESET belongs to the given CORESET.

As one embodiment, the meaning of the phrase "a search space set associated with one CORESET" comprises: one CORESET is used for determining time-frequency resources occupied by the search space set associated with the one CORESET in one monitoring occasion.

As one embodiment, the meaning of the phrase "a search space set associated with one CORESET" comprises: one CORESET comprises the time-frequency resources occupied by the search space set associated with the one CORESET in one monitoring occasion.

As one embodiment, the meaning of the phrase "a search space set associated with one CORESET" comprises: REs occupied by one CORESET comprise REs occupied by the search space set associated with the one CORESET in one monitoring occasion.

As one embodiment, the meaning of the phrase "a search space set associated with one CORESET" comprises: RBs occupied by one CORESET in frequency domain comprise RBs occupied by the search space set associated with one CORESET in frequency domain.

As one embodiment, the meaning of the phrase "a search space set associated with one CORESET" comprises: frequency domain resources occupied by one CORESET comprise frequency domain resources occupied by the search space set associated with the one CORESET.

As one embodiment, the meaning of the phrase "a search space set associated with one CORESET" comprises: symbols occupied by one CORESET are used for determining symbols occupied by the search space set associated with the one CORESET in one detection occasion.

As one embodiment, the meaning of the phrase "a search space set associated with one CORESET" comprises: the symbols occupied by one CORESET comprise symbols occupied by the search space set associated with one CORESET in one detection occasion.

As one embodiment, the meaning of the phrase "a search space set associated with one CORESET" comprises: configuration information of the search space set associated with one CORESET comprises an index of the one CORESET.

As one embodiment, one monitoring occasion comprises one time period.

As one embodiment, one monitoring occasion comprises at least one symbol.

As one embodiment, one monitoring occasion comprises one slot.

As one embodiment, one monitoring occasion comprises one sub-slot.

As one embodiment, one monitoring occasion comprises one subframe.

As one embodiment, any one of the N CORESETs belongs to only one of the first CORESET pool and the second CORESET pool.

As one embodiment, "one CORESET belongs to the first CORESET pool" is equivalent to "one CORESET is associated with an index of the first CORESET pool"; and "one CORESET belongs to the second CORESET pool" is equivalent to "one CORESET is associated with an index of the second CORESET pool".

As one embodiment, when one CORESET is configured with a coresetPoolIndex parameter, a value of the coresetPoolIndex parameter indicates an index of a CORESET pool with which the one CORESET is associated.

As one embodiment, when one CORESET is not configured with the coresetPoolIndex parameter, the one CORESET is associated with an index of the first CORESET pool.

As one embodiment, when one CORESET is configured with the coresetPoolIndex parameter, the value of the coresetPoolIndex parameter indicates an index of a CORESET pool to which the one CORESET belongs.

As one embodiment, when one CORESET is not configured with the coresetPoolIndex parameter, the one CORESET belongs to the first CORESET pool.

As one embodiment, the first CORESET pool is a CORESET pool with a coresetPoolIndex value being 0, and the second CORESET pool is a CORESET pool with a coresetPoolIndex value being 1.

As one embodiment, the first CORESET pool is different from the CORESET pool with the coresetPoolIndex value being 0, and the second CORESET pool is different from the CORESET pool with the coresetPoolIndex value being 1.

As one embodiment, a specific definition of coresetPoolIndex refers to Section 10 of 3GPP TS38.213.

As one embodiment, the index of the first CORESET pool is different from an index of the second CORESET pool.

As one embodiment, the index of the first CORESET pool and the index of the second CORESET pool are different non-negative integers.

As one embodiment, the index of the first CORESET pool and the index of the second CORESET pool are different positive integers.

As one embodiment, the index of the first CORESET pool and the index of the second CORESET pool are 0 and 1 respectively.

As one embodiment, the index of the first CORESET pool and the index of the second CORESET pool are 1 and 0 respectively.

### Embodiment 10

Embodiment 10 illustrates a schematic diagram of a third TCI state and a fourth TCI state according to another embodiment of the present application, as shown in FIG. 10.

In Embodiment 10, any one of T codepoints indicates one or two TCI states applied to a PDSCH, there is one T codepoint in the T codepoints that indicates two TCI states applied to the PDSCH, and the third TCI state and the fourth TCI state are two TCI states indicated by a minimum codepoint in the T codepoints that satisfy "indicating two TCI states applied to the PDSCH".

As one embodiment, the one or two TCI states applied to the PDSCH indicated by any one of the T codepoints are also applied to a PDCCH.

As one embodiment, the one or two TCI states applied to the PDSCH indicated by any one of the T codepoints are also applied to the PDCCH and an aperiodic SRS.

As one embodiment, the one or two TCI states applied to the PDSCH indicated by any one of the T codepoints are also applied to at least one of the PDCCH, an aperiodic CSI-RS, a PUSCH, a PUCCH, or the aperiodic SRS.

As one embodiment, the one or two TCI states applied to the PDSCH indicated by any of the T codepoints are also applied to the PDCCH, the aperiodic CSI-RS, and the PUSCH.

As one embodiment, the one or two TCI states applied to the PDSCH indicated by any of the T codepoints are also applied to the PDCCH, the aperiodic CSI-RS, the PUSCH, the PUCCH, or the aperiodic SRS.

As one embodiment, a first information block set comprises a Transmission Configuration Indication field, and the Transmission Configuration Indication field at least comprises the T codepoints.

As one sub-embodiment of the above embodiments, the number of bits comprised in the Transmission Configuration Indication field is a minimum integer that is not less than a base-2 logarithm of T.

As one embodiment, a first signaling comprises the Transmission Configuration Indication field, and the Transmission Configuration Indication field at least comprises the T codepoints.

As one sub-embodiment of the above embodiments, the number of bits comprised in the Transmission Configuration Indication field is a minimum integer that is not less than a base-2 logarithm of T.

As one embodiment, any one of the T codepoints is one non-negative integer.

As one embodiment, any one of the T codepoints is one binary bit sequence.

As one embodiment, any one of the T codepoints is one non-negative integer indicated by the binary bit sequence.

As one embodiment, any one of the T codepoints corresponds to one value within a value range of the Transmission Configuration Indication field.

As one embodiment, any one of T codepoints is one value within the value range of the Transmission Configuration Indication field.

Typically, the one or two TCI states applied to the PDSCH corresponding to any one of the T codepoints are configured by an RRC, or the one or two TCI states applied to the PDSCH corresponding to any one of the T codepoints are activated or indicated by an MAC CE.

### Embodiment 11

Embodiment 11 illustrates a schematic diagram of a third TCI state and a fourth TCI state according to still another embodiment of the present application, as shown in FIG. 11.

In Embodiment 11, any one of T codepoints indicates one or two TCI states applied to a PDSCH, there is one T codepoint in the T codepoints that indicates two TCI states applied to the PDSCH, and the third TCI state and the fourth TCI state are two TCI states indicated by a minimum codepoint in the T codepoints that satisfy "indicating two TCI states applied to the PDSCH, and wherein a physical cell identity associated with at least one TCI state is the same as a physical cell identity of a first serving cell".

As one embodiment, when physical cell identities associated with the third TCI state and the fourth TCI state respectively are both the same as the physical cell identity of the first serving cell, the third TCI state and the fourth TCI state are the two TCI states that determine a quasi co-location parameter of a first signal.

As one embodiment, when only one of the physical cell identities associated with the third TCI state and the fourth TCI state respectively is the same as the physical cell identity of the first serving cell, the third TCI state and the fourth TCI state are the two TCI states that determine the quasi co-location parameter of the first signal.

As one embodiment, when only a physical cell identity associated with the third TCI state in the third TCI state and the fourth TCI state is the same as the physical cell identity of the first serving cell, the third TCI state and the fourth TCI state are the two TCI states that determine the quasi co-location parameter of the first signal.

As one embodiment, when the physical cell identity associated with the third TCI state is the same as the physical cell identity of the first serving cell, and a physical cell identity associated with the fourth TCI state is different from the physical cell identity of the first serving cell, the third TCI state and the fourth TCI state are the two TCI states that determine the quasi co-location parameter of the first signal.

As one embodiment, when the physical cell identity associated with the third TCI state is different from the physical cell identity of the first serving cell, and the physical cell identity associated with the fourth TCI state is the same as the physical cell identity of the first serving cell, the third TCI state and the fourth TCI state are the two TCI states that determine the quasi co-location parameter of the first signal.

As one embodiment, when the physical cell identities associated with the third TCI state and the fourth TCI state respectively are both different from the physical cell identity of the first serving cell, the third TCI state and the fourth TCI state are not the two TCI states that determine the quasi co-location parameter of the first signal.

### Embodiment 12

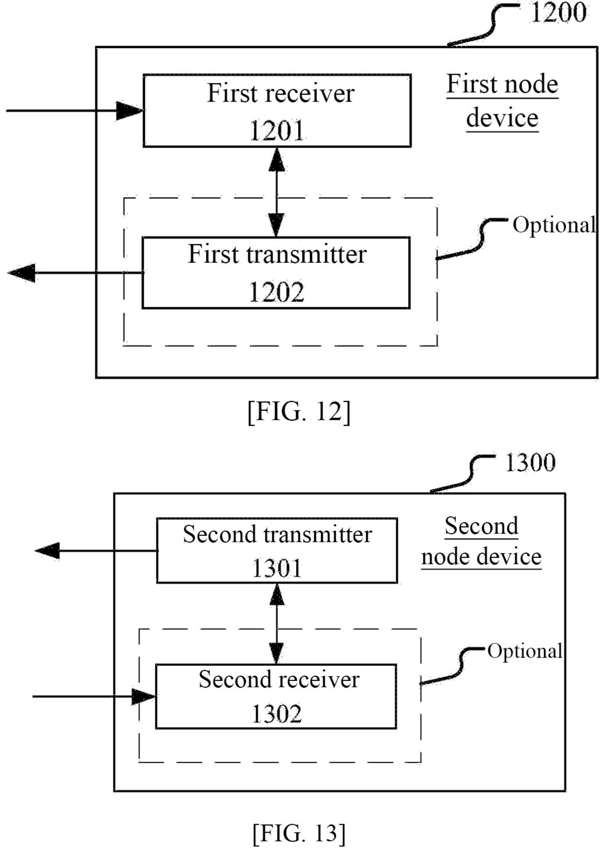

Embodiment 12 illustrates a structural block diagram of a processing device used in a first node device according to one embodiment of the present application, as shown in FIG. 12. In

FIG. 12, a processing device 1200 in the first node device comprises at least a first receiver 1201 in the first receiver 1201 or a first transmitter 1202, and the first transmitter 1202 is optional.

The first receiver 1201 receives a first information block set; receives a first signaling; and receives a first signal.

In Embodiment 12, first CSI report configuration comprises a first RS resource set, and the first RS resource set comprises one or more RS resources; a first information block is used for determining at least one index; channel measurement used for calculating a first CSI report is obtained based on at least one RS resource in the first RS resource set that is not later than a CSI reference resource of the first CSI report; and the first CSI report depends on whether RS resources in the first RS resource set are associated with the at least one index.

As one embodiment, when physical cell identities associated with a first TCI state and a second TCI state respectively are both the same as a physical cell identity of a first serving cell, the first TCI state and the second TCI state are two TCI states that determine a quasi co-location parameter of the first signal.

As one embodiment, when only one of the physical cell identities associated with the first TCI state and the second TCI state respectively is the same as the physical cell identity of the first serving cell, the first TCI state and the second TCI state are the two TCI states that determine the quasi co-location parameter of the first signal.

As one embodiment, when the physical cell identities associated with the first TCI state and the second TCI state respectively are both different from the physical cell identity of the first serving cell, a third TCI state and a fourth TCI state are two TCI states that determine the quasi co-location parameter of the first signal.

As one embodiment, the third TCI state and the fourth TCI state are two TCI states of a reference CORESET, and the reference CORESET is one CORESET of the first serving cell; or the third TCI state is a TCI state of a first reference CORESET, the fourth TCI state is a TCI state of a second reference CORESET, and the first reference CORESET and the second reference CORESET are two CORESETs of the first serving cell.

As one embodiment, any one of T codepoints indicates one or two TCI states applied to a PDSCH, there is one T codepoint in the T codepoints that indicates two TCI states applied to the PDSCH, and the third TCI state and the fourth TCI state are two TCI states indicated by a minimum codepoint in the T codepoints that satisfy "indicating two TCI states applied to the PDSCH".

As one embodiment, any one of T codepoints indicates one or two TCI states applied to the PDSCH, there is one T codepoint in the T codepoints that indicates two TCI states applied to the PDSCH, and the third TCI state and the fourth TCI state are two TCI states indicated by the minimum codepoint in the T codepoints that satisfy "indicating two TCI states applied to the PDSCH, and wherein a physical cell identity associated with at least one TCI state is the same as the physical cell identity of the first serving cell".

As one embodiment, the first node device comprises:
the first transmitter 1202 sending a second signal,
wherein a third DCI signaling is one DCI signaling carrying the first information block set; and an HARQ-ACK related to the third DCI signaling is carried by the second signal.

As one embodiment, the first node device also comprises:
the first transmitter 1202 sending a first signal,
wherein the first signal is a PDSCH, and the third signal is used for indicating whether the first signal is received correctly; or the first signal is an aperiodic CSI-RS, and the third signal comprises CSI (Channel State Information) obtained through measurement and calculation for the first signal.

As one embodiment, the first node device is user equipment.

As one embodiment, the first node device is a relay node device.

As one embodiment, the first receiver 1201 comprises at least one of {an antenna 452, a receiving device 454, a receiving processor 456, a multi-antenna receiving processor 458, a controller/processor 459, a memory 460, and a data source 467} in Embodiment 4.

As one embodiment, the first transmitter 1202 comprises at least one of {the antenna 452, the transmitting device 454, a transmitting processor 468, a multi-antenna transmitting processor 457, the controller/processor 459, the memory 460, and the data source 467} in Embodiment 4.

### Embodiment 13

Embodiment 13 illustrates a structural block diagram of a processing device used in a second node device according to one embodiment of the present application, as shown in FIG. 13. In FIG. 13, a processing device 1300 in the second node device comprises at least a second transmitter 1301 in the second transmitter 1301 or a second receiver 1302, and the second receiver 1302 is optional.

The second transmitter 1301 sends a first information block set; sends a first signaling; and sends a first signal.

In Embodiment 13, first CSI report configuration comprises a first RS resource set, and the first RS resource set comprises one or more RS resources; a first information block is used for determining at least one index; channel measurement used for calculating a first CSI report is obtained based on at least one RS resource in the first RS resource set that is not later than a CSI reference resource of the first CSI report; and the first CSI report depends on whether RS resources in the first RS resource set are associated with the at least one index.

As one embodiment, when physical cell identities associated with a first TCI state and a second TCI state respectively are both the same as a physical cell identity of a first serving cell, the first TCI state and the second TCI state are two TCI states that determine a quasi co-location parameter of the first signal.

As one embodiment, when only one of the physical cell identities associated with the first TCI state and the second TCI state respectively is the same as the physical cell identity of the first serving cell, the first TCI state and the second TCI state are the two TCI states that determine the quasi co-location parameter of the first signal.

As one embodiment, when the physical cell identities associated with the first TCI state and the second TCI state respectively are both different from the physical cell identity of the first serving cell, a third TCI state and a fourth TCI state are two TCI states that determine the quasi co-location parameter of the first signal.

As one embodiment, the third TCI state and the fourth TCI state are two TCI states of a reference CORESET, and the reference CORESET is one CORESET of the first serving cell; or the third TCI state is a TCI state of a first reference CORESET, the fourth TCI state is a TCI state of a second reference CORESET, and the first reference CORESET and the second reference CORESET are two CORESETs of the first serving cell.

As one embodiment, any one of T codepoints indicates one or two TCI states applied to a PDSCH, there is one T codepoint in the T codepoints that indicates two TCI states applied to the PDSCH, and the third TCI state and the fourth TCI state are two TCI states indicated by a minimum codepoint in the T codepoints that satisfy "indicating two TCI states applied to the PDSCH".

As one embodiment, any one of T codepoints indicates one or two TCI states applied to the PDSCH, there is one T codepoint in the T codepoints that indicates two TCI states applied to the PDSCH, and the third TCI state and the fourth TCI state are two TCI states indicated by the minimum codepoint in the T codepoints that satisfy "indicating two TCI states applied to the PDSCH, and wherein a physical cell identity associated with at least one TCI state is the same as the physical cell identity of the first serving cell".

As one embodiment, the second node device also comprises:
the second receiver 1302 receiving a second signal,
wherein a third DCI signaling is one DCI signaling carrying the first information block set; and an HARQ-ACK related to the third DCI signaling is carried by the second signal.

As one embodiment, the second node device also comprises:
the second receiver 1302 receiving a third signal,
wherein the first signal is a PDSCH, and the third signal is used for indicating whether the first signal is received correctly; or the first signal is an aperiodic CSI-RS, and the third signal comprises CSI (Channel State Information) obtained through measurement and calculation for the first signal.

As one embodiment, the second node device is a base station device.

As one embodiment, the second node device is user equipment.

As one embodiment, the second node device is a relay node device.

As one embodiment, the second transmitter 1301 comprises at least one of {an antenna 420, a transmitting device 418, a transmitting processor 416, a multi-antenna transmitting processor 471, a controller/processor 475, and a memory 476} in Embodiment 4.

As one embodiment, the second receiver 1302 comprises at least one of {the antenna 420, the receiving device 418, a receiving processor 470, a multi-antenna receiving processor 472, the controller/processor 475, and the memory 476} in Embodiment 4.

Those of ordinary skill in the art can understand that all or part of the steps in the above method can be completed by instructing relevant hardware through a program, and the program can be stored in a computer-readable storage medium, such as a read-only memory, a hard disk or an optical disk. Optionally, all or part of the steps in the above embodiments can also be implemented using one or more integrated circuits. Accordingly, each module unit in the above embodiments can be implemented in the form of hardware or in the form of a software function module. The present application is not limited to any specific form of software and hardware combination. The user equipment, the terminal, and the UE in the present application include but are not limited to a drone, a communication module on the drone, a remote-controlled airplane, an aircraft, a small airplane, a mobile phone, a tablet computer, a notebook, a vehicle-mounted communication device, a wireless sensor, an Internet card, an Internet of Things terminal, an RFID terminal, an NB-IOT terminal, an MTC (Machine Type Communication) terminal, an eMTC (enhanced MTC) terminal, a data card, an Internet card, a vehicle-mounted communication device, a low-cost mobile phone, a low-cost tablet computer, and other wireless communication devices. The base stations or the system devices in the present application include but are not limited to a macro cellular base station, a micro cellular base station, a Femtocell, a relay base station, a gNB (NR node B), a TRP (Transmitter Receiver Point) and other wireless communication devices.

The above is only a preferred embodiment of the present application and is not intended to limit the scope of protection of the present application. Any changes and modifications made based on the embodiments described in the description, if similar partial or complete technical effects can be obtained, should be deemed obvious and belong to the scope of protection of the present invention.

## Claims

1. A first node for wireless communication, comprising:
a first receiver receiving a first information block set; receiving a first signaling; and receiving a first signal,
wherein the first information block set indicates a first TCI state and a second TCI state, and the first TCI state and the second TCI state are two TCI states configured to a first serving cell; and the first signaling is used for scheduling or triggering the first signal, a quasi co-location parameter of the first signal is determined by the two TCI states, and the two TCI states that determine the quasi co-location parameter of the first signal depend on whether a physical cell identity associated with at least one of the first TCI state and the second TCI state is the same as a physical cell identity of the first serving cell.

2. The first node according to claim 1, wherein when physical cell identities associated with the first TCI state and the second TCI state respectively are both the same as the physical cell identity of the first serving cell, the first TCI state and the second TCI state are the two TCI states that determine the quasi co-location parameter of the first signal.

3. The first node according to claim 1 or 2, wherein when only one of the physical cell identities associated with the first TCI state and the second TCI state respectively is the same as the physical cell identity of the first serving cell, the first TCI state and the second TCI state are the two TCI states that determine the quasi co-location parameter of the first signal.

4. The first node according to any one of claims 1 to 3, wherein when the physical cell identities associated with the first TCI state and the second TCI state respectively are both different from the physical cell identity of the first serving cell, a third TCI state and a fourth TCI state are the two TCI states that determine the quasi co-location parameter of the first signal.

5. The first node according to claim 4, wherein the third TCI state and the fourth TCI state are two TCI states of a reference CORESET, and the reference CORESET is one CORESET of the first serving cell; or the third TCI state is a TCI state of a first reference CORESET, the fourth TCI state is a TCI state of a second reference CORESET, and the first reference CORESET and the second reference CORESET are two CORESETs of the first serving cell.

6. The first node according to claim 4, wherein any one of T codepoints indicates one or two TCI states applied to a PDSCH, there is one codepoint in the T codepoints that indicates two TCI states applied to the PDSCH, and the third TCI state and the fourth TCI state are two TCI states indicated by a minimum codepoint in the T codepoints that satisfy "indicating two TCI states applied to the PDSCH".

7. The first node according to claim 4, wherein any one of T codepoints indicates one or two TCI states applied to a PDSCH, there is one codepoint in the T codepoints that indicates two TCI states applied to the PDSCH, and the third TCI state and the fourth TCI state are two TCI states indicated by a minimum codepoint in the T codepoints that satisfy "indicating two TCI states applied to the PDSCH, and wherein a physical cell identity associated with at least one TCI state is the same as the physical cell identity of the first serving cell".

8. A second node for wireless communication, comprising:
a second transmitter sending a first information block set; sending a first signaling; and sending a first signal,
wherein the first information block set indicates a first TCI state and a second TCI state, and the first TCI state and the second TCI state are two TCI states configured to a first serving cell; and the first signaling is used for scheduling or triggering the first signal, a quasi co-location parameter of the first signal is determined by the two TCI states, and the two TCI states that determine the quasi co-location parameter of the first signal depend on whether a physical cell identity associated with at least one of the first TCI state and the second TCI state is the same as a physical cell identity of the first serving cell.

9. The second node according to claim 8, wherein when physical cell identities associated with the first TCI state and the second TCI state respectively are both the same as the physical cell identity of the first serving cell, the first TCI state and the second TCI state are the two TCI states that determine the quasi co-location parameter of the first signal.

10. The second node according to claim 8 or 9, wherein when only one of the physical cell identities associated with the first TCI state and the second TCI state respectively is the same as the physical cell identity of the first serving cell, the first TCI state and the second TCI state are the two TCI states that determine the quasi co-location parameter of the first signal.

11. The second node according to any one of claims 8 to 10, wherein when the physical cell identities associated with the first TCI state and the second TCI state respectively are both different from the physical cell identity of the first serving cell, a third TCI state and a fourth TCI state are the two TCI states that determine the quasi co-location parameter of the first signal.

12. The second node according to claim 11, wherein the third TCI state and the fourth TCI state are two TCI states of a reference CORESET, and the reference CORESET is one CORESET of the first serving cell; or the third TCI state is a TCI state of a first reference CORESET, the fourth TCI state is a TCI state of a second reference CORESET, and the first reference CORESET and the second reference CORESET are two CORESETs of the first serving cell.

13. The second node according to claim 11, wherein any one of T codepoints indicates one or two TCI states applied to a PDSCH, there is one codepoint in the T codepoints that indicates two TCI states applied to the PDSCH, and the third TCI state and the fourth TCI state are two TCI states indicated by a minimum codepoint in the T codepoints that satisfy "indicating two TCI states applied to the PDSCH".

14. The second node according to claim 11, wherein any one of T codepoints indicates one or two TCI states applied to a PDSCH, there is one codepoint in the T codepoints that indicates two TCI states applied to the PDSCH, and the third TCI state and the fourth TCI state are two TCI states indicated by a minimum codepoint in the T codepoints that satisfy "indicating two TCI states applied to the PDSCH, and wherein a physical cell identity associated with at least one TCI state is the same as the physical cell identity of the first serving cell".

15. A method used in a first node for wireless communication, comprising:
receiving a first information block set; receiving a first signaling; and receiving a first signal,
wherein the first information block set indicates a first TCI state and a second TCI state, and the first TCI state and the second TCI state are two TCI states configured to a first serving cell; and the first signaling is used for scheduling or triggering the first signal, a quasi co-location parameter of the first signal is determined by the two TCI states, and the two TCI states that determine the quasi co-location parameter of the first signal depend on whether a physical cell identity associated with at least one of the first TCI state and the second TCI state is the same as a physical cell identity of the first serving cell.

16. The method according to claim 15, wherein when physical cell identities associated with the first TCI state and the second TCI state respectively are both the same as the physical cell identity of the first serving cell, the first TCI state and the second TCI state are the two TCI states that determine the quasi co-location parameter of the first signal.

17. The method according to claim 15 or 16, wherein when only one of the physical cell identities associated with the first TCI state and the second TCI state respectively is the same as the physical cell identity of the first serving cell, the first TCI state and the second TCI state are the two TCI states that determine the quasi co-location parameter of the first signal.

18. The method according to any one of claims 15 to 17, wherein when the physical cell identities associated with the first TCI state and the second TCI state respectively are both different from the physical cell identity of the first serving cell, a third TCI state and a fourth TCI state are the two TCI states that determine the quasi co-location parameter of the first signal.

19. The method according to claim 18, wherein the third TCI state and the fourth TCI state are two TCI states of a reference CORESET, and the reference CORESET is one CORESET of the first serving cell; or the third TCI state is a TCI state of a first reference CORESET, the fourth TCI state is a TCI state of a second reference CORESET, and the first reference CORESET and the second reference CORESET are two CORESETs of the first serving cell.

20. The method according to claim 18, wherein any one of T codepoints indicates one or two TCI states applied to a PDSCH, there is one codepoint in the T codepoints that indicates two TCI states applied to the PDSCH, and the third TCI state and the fourth TCI state are two TCI states indicated by a minimum codepoint in the T codepoints that satisfy "indicating two TCI states applied to the PDSCH".

21. The method according to claim 18, wherein any one of T codepoints indicates one or two TCI states applied to a PDSCH, there is one codepoint in the T codepoints that indicates two TCI states applied to the PDSCH, and the third TCI state and the fourth TCI state are two TCI states indicated by a minimum codepoint in the T codepoints that satisfy "indicating two TCI states applied to the PDSCH, and wherein a physical cell identity associated with at least one TCI state is the same as the physical cell identity of the first serving cell".

22. A method used in a second node for wireless communication, comprising:
sending a first information block set; sending a first signaling; and sending a first signal,
wherein the first information block set indicates a first TCI state and a second TCI state, and the first TCI state and the second TCI state are two TCI states configured to a first serving cell; and the first signaling is used for scheduling or triggering the first signal, a quasi co-location parameter of the first signal is determined by the two TCI states, and the two TCI states that determine the quasi co-location parameter of the first signal depend on whether a physical cell identity associated with at least one of the first TCI state and the second TCI state is the same as a physical cell identity of the first serving cell.

23. The method according to claim 22, wherein when physical cell identities associated with the first TCI state and the second TCI state respectively are both the same as the physical cell identity of the first serving cell, the first TCI state and the second TCI state are the two TCI states that determine the quasi co-location parameter of the first signal.

24. The method according to claim 22 or 23, wherein when only one of the physical cell identities associated with the first TCI state and the second TCI state respectively is the same as the physical cell identity of the first serving cell, the first TCI state and the second TCI state are the two TCI states that determine the quasi co-location parameter of the first signal.

25. The method according to any one of claims 22 to 24, wherein when the physical cell identities associated with the first TCI state and the second TCI state respectively are both different from the physical cell identity of the first serving cell, a third TCI state and a fourth TCI state are the two TCI states that determine the quasi co-location parameter of the first signal.

26. The method according to claim 25, wherein the third TCI state and the fourth TCI state are two TCI states of a reference CORESET, and the reference CORESET is one CORESET of the first serving cell; or the third TCI state is a TCI state of a first reference CORESET, the fourth TCI state is a TCI state of a second reference CORESET, and the first reference CORESET and the second reference CORESET are two CORESETs of the first serving cell.

27. The method according to claim 25, wherein any one of T codepoints indicates one or two TCI states applied to a PDSCH, there is one codepoint in the T codepoints that indicates two TCI states applied to the PDSCH, and the third TCI state and the fourth TCI state are two TCI states indicated by a minimum codepoint in the T codepoints that satisfy "indicating two TCI states applied to the PDSCH".

28. The method according to claim 25, wherein any one of T codepoints indicates one or two TCI states applied to a PDSCH, there is one codepoint in the T codepoints that indicates two TCI states applied to the PDSCH, and the third TCI state and the fourth TCI state are two TCI states indicated by a minimum codepoint in the T codepoints that satisfy "indicating two TCI states applied to the PDSCH, and wherein a physical cell identity associated with at least one TCI state is the same as the physical cell identity of the first serving cell".
